(19) Europäisches Patentamt
European Patent Office
Office européen des brevets

(11) EP 0 967 869 B1

(12) **EUROPEAN PATENT SPECIFICATION**

(45) Date of publication and mention of the grant of the patent:
**16.04.2003 Bulletin 2003/16**

(21) Application number: **98903700.7**

(22) Date of filing: **26.01.1998**

(51) Int Cl.7: **A01N 43/54**
// (A01N43/54, 61:00, 55:00, 47:38, 43:84, 43:653, 43:54, 37:50)

(86) International application number:
**PCT/US98/01381**

(87) International publication number:
**WO 98/033381 (06.08.1998 Gazette 1998/31)**

(54) **FUNGICIDAL MIXTURES**

FUNGIZIDE MISCHUNGEN

MELANGES FONGICIDES

(84) Designated Contracting States:
**CH DE DK ES FR GB IE IT LI NL**

(30) Priority: **30.01.1997 US 36063 P**

(43) Date of publication of application:
**05.01.2000 Bulletin 2000/01**

(60) Divisional application:
**03000694.4**

(73) Proprietor: **E.I. DU PONT DE NEMOURS AND COMPANY**
**Wilmington Delaware 19898 (US)**

(72) Inventors:
- **CROMPTON, Martina, Cajnar**
  **Elkton, MD 21921 (US)**
- **FOOR, Stephen, Ray**
  **Hockessin, DE 19707 (US)**
- **JULIS, Anthony, Jay**
  **Wilmington, DE 19803 (US)**

(74) Representative: **Beacham, Annabel Rose**
**Frank B. Dehn & Co.,**
**European Patent Attorneys,**
**179 Queen Victoria Street**
**London EC4V 4EL (GB)**

(56) References cited:
**WO-A-94/26722**
**WO-A-97/00612**
**WO-A-97/02262**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 967 869 B1

## Description

BACKGROUND OF THE INVENTION

Fungicides that effectively control plant diseases are in constant demand by growers. Plant diseases are highly destructive, difficult to control and quickly develop resistance to commercial fungicides. Combinations of pesticides are often used to facilitate disease control, to broaden spectrum of control and to retard resistance development. It is recognized in the art that the advantages of particular pesticide combinations can often vary, depending on such factors as the particular plant and plant disease to be treated, and the treatment conditions. Accordingly, there is an ongoing search for advantageous combinations of pesticides.

International Patent Application WO 94/26722 discloses certain quinazolinone compounds as fungicides (e. g., 6-bromo-3-propyl-2-propyloxy-4(3*H*)-quinazolinone, 6,8-diiodo-3-propyl-2-propyloxy-4(3*H*)-quinazolinone and 6-iodo-3-propyl-2-propyloxy-4(3*H*)-quinazolinone). International Patent Application WO 95/14009 discloses certain triazolone fungicides (e.g., 2,4-dihydro-5-methoxy-2-methyl-4-[2-[[[[1-[3-(trifluoromethyl)phenyl]ethylidene]amino]oxy]-methyl]phenyl]-3*H*-1,2,4-triazol-3-one). Kresoxim-methyl (BAS 490F) is a fungicide under consideration for the control of plant diseases, especially fungal diseases of wheat, grapes and fruits. (See E. Ammermann, G. Lorenz, K. Schelberger, B. Wenderoth, H. Sauter and C. Rentzea "BAS 490F - A Broad-Spectrum Fungicide with a New Mode of Action" in *Brighton Crap Protection Conference - Pests and Diseases* - 1992, *1*, 403-410.) Azoxystrobin (ICIA5504) is a fungicide under consideration for the control of plant diseases on a wide range of crops. (See J. R. Godwin, V. M. Anthony, J. M. Clough and C. R. A. Godfrey "ICIA5504: A Novel, Broad Spectrum, Systemic β-Methoxyacrylate Fungicide" in *Brighton Crop Protection Conference - Pests and Diseases* - 1992, *1*, 435-442.) European Patent Application EP-A-398,692 discloses (*E*)-2-(methoxyimino)-*N*-methyl-2-(2-phenoxyphenyl)acetamide also known as SSF 126. This fungicide is under consideration for the control of plant disease, especially of rice. EP-A-68813 discloses certain triazole compounds as fungicides (e.g., flusilazole). EP-A-40345 discloses certain triazole compounds as fungicides (e.g., tebuconazole).

WO97/02262 discloses certain pyrimidinone compounds as fungicides for the control of plant diseases caused by fungal plant pathogens.

SUMMARY OF THE INVENTION

This invention is directed to fungicidal compositions (e.g., mixtures) comprising (1) at least one compound selected from the quinazolinones of Formula I (including all geometric and stereoisomers), *N*-oxides, and agriculturally suitable salts thereof,

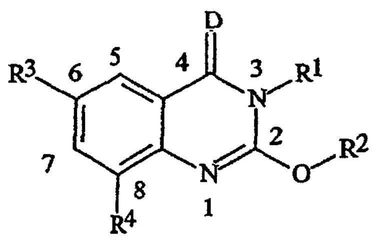

wherein

D is 0 or S;
$R^1$ is $C_1$-$C_6$ alkyl;
$R^2$ is $C_1$-$C_6$ alkyl;
$R^3$ is halogen; and
$R^4$ is hydrogen or halogen;

and (2) at least one compound selected from compounds acting at the *bc*$_1$ complex of the fungal mitochondrial respiratory electron transfer site. In the compositions of the invention, component (1) and component (2) are present in a fungicidally effective amount and the
mole ratio of component (1) to component (2) is from 30:1 to 1:30. Advantageous methods include those where component (1) and component (2) are added in amounts sufficient to provide a fungicidal effectiveness greater than the sum of the fungicidal effectivenesses provided by those amounts of said components taken independently.

DETAILS OF THE INVENTION

Combinations of fungicides are used in accordance with this invention to facilitate disease control and to retard resistance development. Suitable compositions and methods are provided.

For example, this invention also provides methods for controlling plant diseases caused by fungal plant pathogens comprising applying to the plant or portion thereof to be protected, or to the plant seed or seedling to be protected one of the following:

A) an effective amount of a fungicidal composition comprising component (1), component (2), and at least one of a surfactant, a solid diluent or a liquid diluent;
B) (i) an effective amount of a first composition comprising component (1), and at least one of a surfactant, solid or liquid diluent; and (ii) an effective amount of a second composition comprising component (2), and at least one of a surfactant, a solid diluent or a liquid diluent; said first and second compositions applied sequentially in any order, or
C) an effective amount of a physical mixture of the first and second compositions as defined in B above.

The mole ratio of the compound(s) of component (1) to the compound(s) of component (2) applied is from 30:1 to 1:30, and the compound(s) of component (1) and the compound(s) of component (2) are normally applied in amounts effective to provide control of the fungal disease which is greater than the additive control of that fungal disease provided by the compound(s) of component (1) and the compound(s) of component (2) individually.

Preferred compositions for reasons of ease of synthesis or greater fungicidal activity are:

Preferred 1. A fungicidal composition comprising a fungicidally effective amount of (1) at least one quinazolinone of Formula I (including all geometric and stereoisomers), *N*-oxides, and agriculturally suitable salts thereof, and (2) at least one compound selected from compounds of Formula II (including all geometric and stereoisomers), *N*-oxides, and agriculturally suitable salts thereof,

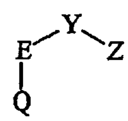

II

wherein

Q is

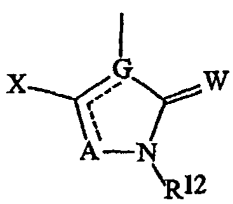

Q-1

or

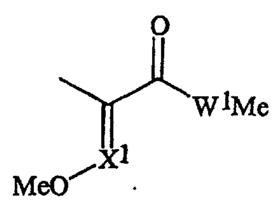

Q-2

;

E is selected from:

i) 1,2-phenylene optionally substituted with $R^{13}$ or both $R^{13}$ and $R^{14}$;
ii) a naphthalene ring, provided that when G and Y are attached to the same ring, then G and Y are attached to adjacent ring members, the naphthalene ring optionally substituted with $R^{13}$ or both $R^{13}$ and $R^{14}$; and
iii) a ring system selected from 5 to 12-membered monocyclic and fused bicyclic aromatic heterocyclic ring systems, each heterocyclic ring system containing I to 6 heteroatoms independently selected from the group

nitrogen, oxygen, and sulfur, provided that each heterocyclic ring system contains no more than 4 nitrogens, no more than 2 oxygens, and no more than 2 sulfurs, each fused bicyclic ring system optionally containing one nonaromatic ring that optionally includes one or two $J^1$ as ring members and optionally includes one or two ring members independently selected from C(=O) and $S(O)_2$, provided that G is attached to an aromatic ring, and when G and Y are attached to the same ring, then G and Y are attached to adjacent ring members, each aromatic

heterocyclic ring system optionally substituted with $R^{13}$ or both $R^{13}$ and $R^{14}$;
A is O, S, N, $NR^{15}$ or $CR^{24}$;
G is C or N; provided that when G is C, then A is O, S or $NR^{15}$ and the floating double bond is attached to G; and when G is N, then A is N or $CR^{24}$ and the floating double bond is attached to A;
W is O, S, NH, N($C_1$-$C_6$ alkyl) or NO($C_1$-$C_6$ alkyl);
$W^1$ is O or NH;
X is H, $OR^{11}$, $S(O)_mR^{11}$, halogen, $C_1$-$C_6$ alkyl, $C_1$-$C_6$ haloalkyl, $C_3$-$C_6$ cycloalkyl, cyano, $NH_2$, $NHR^{11}$, N($C_1$-$C_6$ alkyl)$R^{11}$, NH($C_1$-$C_6$ alkoxy) or N($C_1$-$C_6$ alkoxy)$R^{11}$;
$X^1$ is CH or N;
$R^{11}$ is $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl or $C_2$-$C_4$ alkoxycarbonyl;
$R^{12}$ is H, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl, $C_2$-$C_4$ alkoxycarbonyl, hydroxy, $C_1$-$C_2$ alkoxy or acetyloxy;
$R^{13}$ and $R^{14}$ are each independently halogen; cyano; nitro; hydroxy; $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_1$-$C_6$ alkoxy; $C_1$-$C_6$ haloalkoxy; $C_2$-$C_6$ alkenyloxy; $C_2$-$C_6$ alkynyloxy; $C_1$-$C_6$ alkylthio; $C_1$-$C_6$ alkylsulfinyl; $C_1$-$C_6$ alkylsulfonyl; formyl; $C_2$-$C_6$ alkylcarbonyl; $C_2$-$C_6$ alkoxycarbonyl; $NH_2C(O)$; ($C_1$-$C_4$ alkyl)NHC(O); $(C_1$-$C_4$ alkyl$)_2$NC(O); $Si(R^{35})_3$; $Ge(R^{35})_3$; $(R^{35})_3Si$-C≡C-; or phenyl, phenylethynyl, benzoyl, or phenylsulfonyl each substituted with $R^{18}$ and optionally substituted with one or more $R^{20}$; or when E is 1,2-phenylene and $R^{13}$ and $R^{14}$ are attached to adjacent atoms, $R^{13}$ and $R^{14}$ can be taken together as $C_3$-$C_5$ alkylene, $C_3$-$C_5$ haloalkylene, $C_3$-$C_5$ alkenylene or $C_3$-$C_5$ haloalkenylene each optionally substituted with 1-2 $C_1$-$C_3$ alkyl;
$R^{15}$ is H, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl or $C_2$-$C_4$ alkoxycarbonyl;
Y is -O-, $-S(O)_n-$, $-NR^{25}-$, -C(=O)-, $-CH(OR^{25})-$, $-CHR^{16}-$, $-CHR^{16}CHR^{16}-$, $-CR^{16}=CR^{16}-$, -C≡C-, $-CHR^{25}O-$, $-OCHR^{25}-$, $-CHR^{25}S(O)_n-$, $-S(O)_nCHR^{25}-$, $-CHR^{25}O-N=C(R^{17})-$, $-(R^{17})C=N-OCH(R^{25})-$, $-C(R^{17})=N-O-$, $-O-N=C(R^{17})-$, $-CHR^{25}OC(=O)N(R^{25})-$,$-CHR^{25}OC(=S)N(R^{25})-$, $-CHR^{25}OC(=O)O-$, $-CHR^{25}OC(=S)O-$, $-CHR^{25}OC(=O)S-$, $-CHR^{25}OC(=S)S-$, $-CHR^{25}SC(=O)N(R^{25})-$, $-CHR^{25}SC(=S)N(R^{25})-$, $-CHR^{25}SC(=O)O-$, $-CHR^{25}SC(=S)O-$, $-CHR^{25}SC(=O)S-$, $-CHR^{25}SC(=S)S-$, $-CHR^{25}SC(=NR^{25})S-$, $-CHR^{25}N(R^{25})C(=O)N(R^{25})-$, $-CHR^{25}O-N(R^{25})C(=O)N(R^{25})-$, $-CHR^{25}O-N(R^{25})C(=S)N(R^{25})-$, $-CHR^{25}O-N=C(R^{17})NR^{25}-$, $-CHR^{25}O-N=C(R^{17})OCH_2-$, $-CHR^{25}O-N=C(R^{17})-N=N-$, $-CHR^{25}O-N=C(R^{17})-C(=O)-$, $-CHR^{25}O-N=C(R^{17})-C(=N-A^2-Z^1)-A^1-$, $-CHR^{25}O-N=C(R^{17})-C(R^{17})=N-A^2-A^3-$, $-CHR^{25}O-N=C(-C(R^{17})=N-A^2-Z^1)-$, $-CHR^{25}O-N=C(R^{17})-CH_2O-$, $-CHR^{25}O-N=C(R^{17})-CH_2S-$, $-O-CH_2CH_2O-N=C(R^{17})-$, $-CHR^{25}O-C(R^{25})=C(R^{17})-$, $-CHR^{25}O-C(R^{17})=N-$, $-CHR^{25}S-C(R^{17})=N-$, $-C(R^{17})=N-NR^{25}-$, $-CH=N-N=C(R^{17})-$, $-CHR^{25}N(R^{25})-N=C(R^{17})-$, $-CHR^{25}N(COCH_3)-N=C(R^{17})-$, $-OC(=S)NR^{25}C(=O)-$, $-CHR^{16}-C(=W^2)-A^1-$, $-CHR^{16}CHR^{16}-C(=W^2)-A^1-$, $-CR^{16}=CR^{16}-C(=W^2)-A^1-$, $-C≡C-C(=W^2)-A^1-$, $-N=CR^{16}-C(=W^2)-A^1-$ or a direct bond; and the directionality of the Y linkage is defined such that the moiety depicted on the left side of the linkage is bonded to E and the moiety on the right side of the linkage is bonded to Z;
$Z^1$ is H or $-A^3-Z$;
$W^2$ is O or S;
$A^1$ is O, S, $NR^{25}$ or a direct bond;
$A^2$ is O, $NR^{25}$ or a direct bond;
$A^3$ is -C(=O)-, $-S(O)_2-$ or a direct bond;
each $R^{16}$ is independently H, 1-2 $CH_3$, $C_2$-$C_3$ alkyl, $C_1$-$C_3$ alkoxy, $C_3$-$C_6$ cycloalkyl, formylamino, $C_2$-$C_4$ alkylcarbonylamino, $C_2$-$C_4$ alkoxycarbonylamino, $NH_2C(O)NH$, ($C_1$-$C_3$ alkyl)NHC(O)NH, $(C_1$-$C_3$ alkyl$)_2$NC(O)NH, $N(C_1$-$C_3$ alkyl$)_2$, piperidinyl, morpholinyl, 1-2 halogen, cyano or nitro;
each $R^{17}$ is independently H, $C_1$-$C_6$ alkyl, $C_1$-$C_6$ haloalkyl, $C_1$-$C_6$ alkoxy, $C_1$-$C_6$ haloalkoxy, $C_1$-$C_6$ alkylthio, $C_1$-$C_6$ alkylsulfinyl, $C_1$-$C_6$ alkylsulfonyl, $C_1$-$C_6$ haloalkylthio, $C_1$-$C_6$ haloalkylsulfinyl, $C_1$-$C_6$ haloalkylsulfonyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl, $C_2$-$C_4$ alkoxycarbonyl, halogen, cyano, nitro, hydroxy, amino, NH($C_1$-$C_6$ alkyl), $N(C_1$-$C_6$ alkyl$)_2$ or morpholinyl;
each Z is independently selected from:

i) $C_1$-$C_{10}$ alkyl, $C_2$-$C_{10}$ alkenyl and $C_2$-$C_{10}$ alkynyl each substituted with $R^{19}$ and optionally substituted with

one or more $R^{20}$;

ii) $C_3$-$C_8$ cycloalkyl, $C_3$-$C_8$ cycloalkenyl and phenyl each substituted with $R^{19}$ and optionally substituted with one or more $R^{20}$;

iii) a ring system selected from 3 to 14-membered monocyclic, fused bicyclic and fused tricyclic nonaromatic heterocyclic ring systems and 5 to 14-membered monocyclic, fused bicyclic and fused tricyclic aromatic heterocyclic ring systems, each heterocyclic ring system containing 1 to 6 heteroatoms independently selected from the group nitrogen, oxygen, and sulfur, provided that each heterocyclic ring system contains no more than 4 nitrogens, no more than 2 oxygens, and no more than 2 sulfurs, each nonaromatic or aromatic heterocyclic ring system substituted with $R^{19}$ and optionally substituted with one or more $R^{20}$;

iv) a multicyclic ring system selected from 8 to 14-membered fused-bicyclic and fused-tricyclic ring systems which are an aromatic carbocyclic ring system, a nonaromatic carbocyclic ring system, or a ring system containing one or two nonaromatic rings that each include one or two $J^1$ as ring members and one or two ring members independently selected from C(=O) and $S(O)_2$, and any remaining rings as aromatic carbocyclic rings, each multicyclic ring system substituted with $R^{19}$ and optionally substituted with one or more $R^{20}$; and

v) adamantyl substituted with $R^{19}$ and optionally substituted with one or more $R^{20}$;

each $J^1$ is independently selected from the group $-CHR^{23}-$, $-NR^{23}-$, -O- and $-S(O)_p-$;

$R^{18}$ is H, 1-2 halogen, $C_1$-$C_6$ alkyl, $C_1$-$C_6$ haloalkyl, $C_1$-$C_6$ alkoxy, $C_1$-$C_6$ haloalkoxy, $C_2$-$C_6$ alkenyl, $C_2$-$C_6$ haloalkenyl, $C_2$-$C_6$ alkynyl, $C_1$-$C_6$ alkylthio, $C_1$-$C_6$ haloalkylthio, $C_1$-$C_6$ alkylsulfinyl, $C_1$-$C_6$ alkylsulfonyl, $C_3$-$C_6$ cycloalkyl, $C_3$-$C_6$ alkenyloxy, $CO_2$($C_1$-$C_6$ alkyl), NH($C_1$-$C_6$ alkyl), $N(C_1$-$C_6$ alkyl$)_2$, cyano, nitro, $SiR^{29}R^{30}R^{31}$ or $GeR^{29}R^{30}R^{31}$;

$R^{19}$ is H; 1-2 halogen; $C_1$-$C_6$ alkyl; $C_1$-$C_6$ haloalkyl; $C_1$-$C_6$ alkoxy; $C_1$-$C_6$ haloalkoxy; $C_2$-$C_6$ alkenyl; $C_2$-$C_6$ haloalkenyl; $C_2$-$C_6$ alkynyl; $C_1$-$C_6$ alkylthio; $C_1$-$C_6$ haloalkylthio; $C_1$-$C_6$ alkylsulfinyl; $C_1$-$C_6$ alkylsulfonyl; $C_3$-$C_6$ cycloalkyl; $C_3$-$C_6$ alkenyloxy; $CO_2$($C_1$-$C_6$ alkyl); NH($C_1$-$C_6$ alkyl); $N(C_1$-$C_6$ alkyl$)_2$; $-C(R^{28})=NOR^{27}$; cyano; nitro; $SF_5$; $SiR^{32}R^{33}R^{34}$; or $GeR^{32}R^{33}R^{34}$; or $R^{19}$ is phenyl, benzyl, benzoyl, phenoxy, pyridinyl, pyridinyloxy, thienyl, thienyloxy, furanyl, pyrimidinyl or pyrimidinyloxy each optionally substituted with $R^{21}$ or both $R^{21}$ and $R^{22}$;

each $R^{20}$ is independently halogen, $C_1$-$C_4$ alkyl, $C_1$-$C_4$ haloalkyl, $C_1$-$C_4$ alkoxy, nitro or cyano; or

when $R^{19}$ and an $R^{20}$ are attached to adjacent atoms on Z, $R^{19}$ and said adjacently attached $R^{20}$ can be taken together as $-OCH_2O-$ or $-OCH_2CH_2O-$; each $CH_2$ group of said taken together $R^{19}$ and $R^{20}$ optionally substituted with 1-2 halogen; or

when Y and an $R^{20}$ are attached to adjacent atoms on Z and Y is $-CHR^{25}O-N=C(R^{17})-$, $-O-N=C(R^{17})-$, $-O-CH_2CH_2O-N=C(R^{17})-$, $-CHR^{25}O-C(R^{25})=C(R^{17})-$,$-CH=N-N=C(R^{17})-$, $-CHR^{25}N(R^{25})-N=C(R^{17})-$ or $-CHR^{25}N(COCH_3)-N=C(R^{17})-$, $R^{17}$ and said adjacently attached $R^{20}$ can be taken together as $-(CH_2)_r-J-$ such that J is attached to Z;

J is $-CH_2-$, $-CH_2CH_2-$, $-OCH_2-$, $-CH_2O-$, $-SCH_2-$, $-CH_2S-$, $-N(R^{26})CH_2-$ or $-CH_2N(R^{26})-$; each $CH_2$ group of said J optionally substituted with 1 to 2 $CH_3$;

$R^{21}$ and $R^{22}$ are each independently 1-2 halogen; $C_1$-$C_4$ alkyl; $C_1$-$C_4$ haloalkyl; $C_2$-$C_6$ alkenyl; $C_2$-$C_6$ haloalkenyl; $C_2$-$C_6$ alkynyl; $C_2$-$C_6$ haloalkynyl; $C_2$-$C_6$ alkoxyalkyl; $C_2$-$C_6$ alkylthioalkyl; $C_3$-$C_6$ alkoxyalkynyl; $C_7$-$C_{10}$ tetrahydropyranyloxyalkynyl; benzyloxymethyl; $C_1$-$C_4$ alkoxy; $C_1$-$C_4$ haloalkoxy; $C_3$-$C_6$ alkenyloxy; $C_3$-$C_6$ haloalkenyloxy; $C_3$-$C_6$ alkynyloxy; $C_3$-$C_6$ haloalkynyloxy; $C_2$-$C_6$ alkoxyalkoxy; $C_5$-$C_9$ trialkylsilylalkoxyalkoxy; $C_2$-$C_6$ alkylthioalkoxy; $C_1$-$C_4$ alkylthio; $C_1$-$C_4$ haloalkylthio; $C_1$-$C_4$ alkylsulfinyl; $C_1$-$C_4$ haloalkylsulfinyl; $C_1$-$C_4$ alkylsulfonyl; $C_1$-$C_4$ haloalkylsulfonyl; $C_3$-$C_6$ alkenylthio; $C_3$-$C_6$ haloalkenylthio; $C_2$-$C_6$ alkylthioalkylthio; nitro; cyano; thiocyanato; hydroxy; $N(R^{36})_2$; $SF_5$, $Si(R^{35})_3$; $Ge(R^{35})_3$; $(R^{35})_3Si-C\equiv C-$; $OSi(R^{35})_3$; $OGe(R^{35})_3$; $C(=O)R^{36}$; $C(=S)R^{36}$; $C(=O)OR^{36}$; $C(=S)OR^{36}$; $C(=O)SR^{36}$; $C(=S)SR^{36}$; $C(=O)N(R^{36})_2$; $C(=S)N(R^{36})_2$; $OC(=O)R^{36}$; $OC(=S)R^{36}$; $SC(=O)R^{36}$; $SC(=S)R^{36}$; $N(R^{36})C(=O)R^{36}$; $N(R^{36})C(=S)R^{36}$; $OC(=O)OR^{37}$; $OC(=O)SR^{37}$; $OC(=O)N(R^{36})_2$; $SC(=O)OR^{37}$; $SC(=O)SR^{37}$; $S(O)_2OR^{36}$; $S(O)_2N(R^{36})_2$; $OS(O)_2R^{37}$; $N(R^{36})S(O)_2R^{37}$; or phenyl, phenoxy, benzyl, benzyloxy, phenylsulfonyl, phenylethynyl or pyridinylethynyl, each optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

each $R^{23}$ is independently H; $C_1$-$C_6$ alkyl; $C_1$-$C_6$ haloalkyl; or phenyl optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

$R^{24}$ is H, halogen, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl or $C_3$-$C_6$ cycloalkyl;

each $R^{25}$ is independently H; $C_1$-$C_3$ alkyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano; or

when Y is $-CHR^{25}N(R^{25})C(=O)N(R^{25})-$, the two $R^{25}$ attached to nitrogen atoms on said group can be taken together as $-(CH_2)_S-$; or

when Y is $-CHR^{25}O-N=C(R^{17})NR^{25}-$, $R^{17}$ and the adjacently attached $R^{25}$ can be taken together as $-CH_2-(CH_2)_S-$, $-O-(CH_2)_S-$, $-S-(CH_2)_S-$ or $-N(C_1$-$C_3$ alkyl$)-(CH_2)_S-$; with the directionality of said linkage defined such that the moiety depicted on the left side of the linkage is bonded to the carbon and the moiety on the right side of the linkage

is bonded to the nitrogen;

$R^{26}$, $R^{27}$ and $R^{28}$ are each independently H; $C_1$-$C_3$ alkyl; $C_3$-$C_6$ cycloalkyl; or phenyl optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

$R^{29}$, $R^{30}$, $R^{31}$, $R^{32}$, $R^{33}$ and $R^{34}$ are each independently $C_1$-$C_6$ alkyl, $C_2$-$C_6$ alkenyl, $C_1$-$C_4$ alkoxy or phenyl;

each $R^{35}$ is independently $C_1$-$C_4$ alkyl, $C_1$-$C_4$ haloalkyl, $C_2$-$C_4$ alkenyl, $C_1$-$C_4$ alkoxy or phenyl;

each $R^{36}$ is independently H; $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano;

each $R^{37}$ is independently $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano;

m, n and p are each independently 0, 1 or 2;

r is 0 or 1; and

s is 2 or 3.

Preferred 2. The fungicidal composition of Preferred 1 comprising a fungicidally effective amount of (1) at least one compound selected from the group consisting of

6-bromo-3-propyl-2-propyloxy-4(3*H*)-quinazolinone,

6,8-diiodo-3-propyl-2-propyloxy-4(3*H*)-quinazolinone and 6-iodo-3-propyl-2-propyloxy-4(3*H*)-quinazolinone;

and (2) at least one compound selected from the group consisting of 2,4-dihydro-5-methoxy-2-methyl-4-[2-[[[[1-[3-(trifluoromethyl)phenyl]ethylidene]amino]oxy]methyl]phenyl] -3*H*-1,2,4-triazol-3-one, kresoxim-methyl, azoxystrobin, (*E*)-2-(methoxyimino)-*N*-methyl-2-(2-phenoxyphenyl)acetamide.

Preferred 3. The fungicidal composition of Preferred 2 comprising a fungicidally effective amount of (1) 6-iodo-3-propyl-2-propyloxy-4(3*H*)-quinazolinone (sometimes referred to hereafter as the Formula Ia compound) and (2) 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one (sometimes referred to hereafter as the Formula IIa compound).

Preferred 4. The fungicidal composition of Preferred 2 comprising a fungicidally effective amount of (1) 6-iodo-3-propyl-2-propyloxy-4(3*H*)-quinazolinone, and (2) both 2,4-dihydro-5-methoxy-2-methyl-4-[2-[[[[1-[3-(trifluoromethyl) phenyl]ethylidene]amino]oxy]methyl]phenyl]-3*H*-1,2,4-triazol-3-one and flusilazole.

In the above recitations, the term "alkyl", used either alone or in compound words such as "alkylthio" or "haloalkyl" includes straight-chain or branched alkyl, such as, methyl, ethyl, *n*-propyl, *i*-propyl, or the different butyl, pentyl, hexyl, heptyl, octyl, nonyl and decyl isomers. The term "1-2 $CH_3$" indicates that the substituent can be methyl (i.e., Me) or, when there is a hydrogen attached to the same atom, the substituent and said hydrogen can both be methyl. "Alkenyl" includes straight-chain or branched alkenes such as ethenyl, 1-propenyl, 2-propenyl, and the different butenyl, pentenyl, hexenyl, heptenyl, octenyl, nonenyl and decenyl isomers. "Alkenyl" also includes polyenes such as 1,2-propadienyl and 2,4-hexadienyl. "Alkynyl" includes straight-chain or branched alkynes such as ethynyl, 1-propynyl, 2-propynyl and the different butynyl, pentynyl, hexynyl, heptynyl, octynyl, nonynyl, and decynyl isomers. "Alkynyl" can also include moieties comprised of multiple triple bonds such as 2,5-hexadiynyl.

"Alkylene" denotes a straight-chain or branched alkanediyl. Examples of "alkylene" include $CH_2CH_2CH_2$, $CH_2CH(CH_3)$ and the different butylene and pentylene isomers. "Haloalkylene" denotes a halogen substituted alkylene. Examples of "haloalkylene" include $CH_2CH(CF_3)$, $CH_2CF_2CH_2$ and $CH_2CH(CCl_3)$. "Alkenylene" denotes a straight-chain or branched alkenediyl containing one olefinic bond. Examples of "alkenylene" include $CH_2CH{=}CH$ and $CH{=}C(CH_3)$ and the different butenylene and pentenylene isomers. "Haloalkenylene" denotes a halogen substituted alkenylene. Examples of "haloalkenylene" include $CH_2CCl{=}CCl$ and $CH{=}C(CF_3)$.

"Alkenyloxyalkyl" denotes alkenyl substitution on oxygen which in turn is substituted on alkyl. Examples "alkenyloxyalkyl" include $CH_2{=}CHCH_2OCH_2$ and $CH_3CH{=}CHCH_2OCH_2CH_2$. "Alkynyloxyalkyl" denotes alkynyl substitution on oxygen which in turn is substituted on alkyl. Examples of "alkynyloxyalkyl" include $CH{\equiv}CCH_2OCH_2$ and $CH_3C{\equiv}CCH_2OCH_2CH_2$.

"Alkoxy" includes, for example, methoxy, ethoxy, propyloxy, 1-methylethoxy and the different butoxy, pentyloxy, hexyloxy, heptyloxy, octyloxy, nonyloxy, and decyloxy isomers. "Alkoxyalkyl" denotes alkoxy substitution on alkyl. Examples of "alkoxyalkyl" include $CH_3OCH_2$, $CH_3OCH_2CH_2$, $CH_3CH_2OCH_2$, $CH_3CH_2CH_2CH_2OCH_2$ and $CH_3CH_2OCH_2CH_2$. "Alkoxyalkoxy" denotes alkoxy substitution on alkoxy. Examples of "alkoxyalkoxy" include $CH_3OCH_2O$, $(CH_3)_3COCH_2O$ and $CH_3OCH_2CH_2O$. "Alkenyloxy" includes straight-chain or branched alkenyloxy moieties. Examples of "alkenyloxy" include $H_2C{=}CHCH_2O$, $(CH_3)_2C{=}CHCH_2O$, $(CH_3)CH{=}CHCH_2O$, $(CH_3)CH{=}C(CH_3)CH_2O$ and $CH_2{=}CHCH_2CH_2O$. "Alkynyloxy" includes straight-chain or branched alkynyloxy moieties. Examples of "alkynyloxy" include $HC{\equiv}CCH_2O$, $CH_3C{\equiv}CCH_2O$ and $CH_3C{\equiv}CCH_2CH_2O$. "Alkoxyalkenyl" denotes alkoxy substitu-

tion of alkenyl. "Alkoxyalkenyl" includes straight-chain or branched alkoxyalkenyl moieties. Examples of "alkoxyalkenyl" include $(CH_3)_2CHOCH{=}CH$ and $CH_3OCH_2CH{=}CH$. "Alkoxyalkynyl" denotes alkoxy substitution of alkynyl. "Alkoxyalkynyl" includes straight-chain or branched alkoxyalkynyl moieties. Examples of "alkoxyalkynyl" include $(CH_3)_2CHOCH_2C{\equiv}C$ and $CH_3OCH_2C{\equiv}C$.

"Alkylthio" includes branched or straight-chain alkylthio moieties such as methylthio, ethylthio, and the different propylthio, butylthio, pentylthio, hexylthio, heptylthio, octylthio, nonylthio and decylthio isomers. "Alkylthioalkyl" denotes alkylthio substitution on alkyl. Examples of "alkylthioalkyl" include $CH_3SCH_2$, $CH_3SCH_2CH_2$, $CH_3CH_2SCH_2$, $CH_3CH_2CH_2CH_2SCH_2$ and $CH_3CH_2SCH_2CH_2$. "Alkylthioalkoxy" denotes alkylthio substitution on alkoxy. Examples of "alkylthioalkoxy" include $CH_3SCH_2O$ and $CH_3CH_2SCH_2CH_2O$. "Alkylthioalkylthio" denotes alkylthio substitution on alkylthio. Examples of "alkylthioalkylthio" include $CH_3SCH_2S$ and $CH_3SCH_2CH_2S$. "Alkylsulfinyl" includes both enantiomers of an alkylsulfinyl group. Examples of"alkylsulfinyl" include $CH_3S(O)$, $CH_3CH_2S(O)$, $CH_3CH_2CH_2S(O)$, $(CH_3)_2CHS(O)$ and the different butylsulfinyl, pentylsulfinyl, hexylsulfinyl, heptylsulfinyl and octylsulfinyl isomers. "Alkylsulfinylalkyl" denotes alkylsulfinyl substitution on alkyl. Examples of "alkylsulfinylalkyl" include $CH_3S(O)CH_2$, $CH_3S(O)CH_2CH_2$, $CH_3CH_2S(O)CH_2$, $CH_3CH_2CH_2CH_2S(O)CH_2$ and $CH_3CH_2S(O)CH_2CH_2$. Examples of "alkylsulfonyl" include $CH_3S(O)_2$, $CH_3CH_2S(O)_2$, $CH_3CH_2CH_2S(O)_2$, $(CH_3)_2CHS(O)_2$ and the different butylsulfonyl, pentylsulfonyl, hexylsulfonyl, heptylsulfonyl and octylsulfonyl isomers. "Alkylsulfonylalkyl" denotes alkylsulfonyl substitution on alkyl. Examples of "alkylsulfonylalkyl" include $CH_3S(O)_2CH_2$, $CH_3S(O)_2CH_2CH_2$, $CH_3CH_2S(O)_2CH_2$, $CH_3CH_2CH_2CH_2S(O)_2CH_2$ and $CH_3CH_2S(O)_2CH_2CH_2$. "Alkylthioalkenyl" denotes alkylthio substitution on alkenyl. Examples of "alkylthioalkenyl" include $CH_3SCH_2CH{=}CH$ and $CH_3CH_2SCH{=}CH$. "Alkylthioalkynyl" denotes alkylthio substitution on alkynyl. Examples of "alkylthioalkynyl" include $CH_3SCH_2C{\equiv}C$ and $CH_3CH_2SCH_2CH_2C{\equiv}C$. "Alkenylthio" includes straight-chain and branched alkenylthio moieties. Examples of "alkenylthio" include $CH_2{=}CHCH_2S$ and $CH_2{=}CHCH_2CH_2S$. "Alkenylthioalkyl" denotes alkenylthio substitution on alkyl. Examples of "alkenylthioalkyl" include $CH_2{=}CHCH_2SCH_2$ and $CH_2{=}CHCH_2CH_2SCH_2$. "Alkynylthio" includes straight-chain and branched alkynylthio moieties. Examples of "alkynylthio" include $CH{\equiv}CCH_2S$ and $CH{\equiv}CCH_2CH_2S$. "Alkynylthioalkyl" denotes alkynylthio substitution on alkyl. Examples of "alkynylthioalkyl" include $CH{\equiv}CCH_2SCH_2$ and $CH{\equiv}CCH_2CH_2SCH_2$.

"Cycloalkyl" includes, for example, cyclopropyl, cyclobutyl, cyclopentyl, cyclohexyl, cycloheptyl and cyclooctyl. "(Cycloalkyl)oxyalkyl" denotes cycloalkyl substituted on oxygen which in turn is substituted on alkyl. Examples of "(cycloalkyl)oxyalkyl" include (cyclopentyloxy)methyl and (cyclohexyloxy)methyl. "(Cycloalkyl)thioalkyl" denotes cycloalkyl substituted on sulfur which in turn is substituted on alkyl. Examples of "(cycloalkyl)thioalkyl" include (cyclopentylthio)methyl and (cyclohexylthio)methyl. "Cycloalkenyl" includes groups such as cyclopentenyl and cyclohexenyl as well as groups with more than one double bond such as 1,3- and 1,4-cyclohexadienyl. Examples of "cycloalkylalkyl" include cyclopropylmethyl, cyclopentylethyl, and other cycloalkyl moieties bonded to straight-chain or branched alkyl groups.

"Cyanoalkyl" denotes an alkyl group substituted with one cyano group. Examples of "cyanoalkyl" include $NCCH_2$, $NCCH_2CH_2$ and $CH_3CH(CN)CH_2$. "Nitroalkyl" denotes an alkyl group substituted with one nitro group. Examples of "nitroalkyl" include $NO_2CH_2$ and $CH_3CH(NO_2)CH_2$.

"Tetrahydropyranyloxyalkynyl" denotes a tetrahydropyranyl group on oxygen which in turn is substituted on an alkynyl group. An example of "tetrahydropyranyloxyalkynyl" is 2-[(tetrahydro-2*H*-pyranyl)oxy]ethynyl.

The term "aromatic ring system" denotes fully unsaturated carbocycles and heterocycles in which the polycyclic ring system is aromatic (where aromatic indicates that the Hückel rule is satisfied for the ring system). The term "aromatic carbocyclic ring system" includes fully aromatic carbocycles and carbocycles in which at least one ring of a polycyclic ring system is aromatic (where aromatic indicates that the Hückel rule is satisfied). The term "nonaromatic carbocyclic ring system" denotes fully saturated carbocycles as well as partially or fully unsaturated carbocycles where the Hückel rule is not satisfied by any of the rings in the ring system. The term "aromatic heterocyclic ring system" includes fully aromatic heterocycles and heterocycles in which at least one ring of a polycyclic ring system is aromatic (where aromatic indicates that the Hückel rule is satisfied). Examples of "aromatic heterocyclic ring systems" include furanyl, furazanyl, thienyl, pyrrolyl, pyrazolyl, oxazolyl, oxadiazolyl, imidazolyl, isoxazolyl, thiazolyl, thiadiazolyl, isothiazolyl, pyridyl, pyrimidinyl, pyridazinyl, pyrazinyl and triazinyl with said ring attached through any available carbon or nitrogen. For example, when the aromatic heterocyclic ring is furanyl, it can be 2-furanyl or 3-furanyl, for pyrrolyl, the aromatic heterocyclic ring is 1-pyrrolyl, 2-pyrrolyl or 3-pyrrolyl, for pyridyl, the aromatic ring is 2-pyridyl, 3-pyridyl or 4-pyridyl and similarly for other aromatic heterocyclic rings. The term "nonaromatic heterocyclic ring system" denotes fully saturated heterocycles as well as partially or fully unsaturated heterocycles where the Hückel rule is not satisfied by any of the rings in the ring system. The heterocyclic ring systems can be attached through any available carbon or nitrogen by replacement of a hydrogen on said carbon or nitrogen.

One skilled in the art will appreciate that not all nitrogen containing heterocycles can form *N*-oxides since the nitrogen requires an available lone pair for oxidation to the oxide; one skilled in the art will recognize those nitrogen containing heterocycles which can form *N*-oxides. One skilled in the art will also recognize that tertiary amines can form N-oxides. Synthetic methods for the preparation of N-oxides of heterocycles and tertiary amines are very well

known by one skilled in the art including the oxidation of heterocycles and tertiary amines with peroxy acids such as peracetic and *m*-chloroperbenzoic acid (MCPBA), hydrogen peroxide, alkyl hydroperoxides such as *t*-butyl hydroperoxide, sodium perborate, and dioxiranes such as dimethydioxirane. These methods for the preparation of *N*-oxides have been extensively described and reviewed in the literature, see for example: T. L. Gilchrist in *Comprehensive Organic Synthesis,* vol. 7, pp 748-750, S. V. Ley, Ed., Pergamon Press; M. Tisler and B. Stanovnik in *Comprehensive Heterocyclic Chemistry,* vol. 3, pp 18-20, A. J. Boulton and A. McKillop, Eds., Pergamon Press; M. R. Grimmett and B. R. T. Keene in *Advances in Heterocyclic Chemistry,* vol. 43, pp 149-161, A. R. Katritzky, Ed., Academic Press; M. Tisler and B. Stanovnik in *Advances in Heterocyclic Chemistry,* vol. 9, pp 285-291, A. R. Katritzky and A. J. Boulton, Eds., Academic Press; and G. W. H. Cheeseman and E. S. G. Werstiuk in *Advances in Heterocyclic Chemistry*, vol. 22, pp 390-392, A. R. Katritzky and A. J. Boulton, Eds., Academic Press.

The term "halogen", either alone or in compound words such as "haloalkyl", includes fluorine, chlorine, bromine or iodine. The term "1-2 halogen" indicates that one or two of the available positions for that substituent may be halogen which are independently selected. Further, when used in compound words such as "haloalkyl", said alkyl may be partially or fully substituted with halogen atoms which may be the same or different. Examples of "haloalkyl" include $F_3C$, $ClCH_2$, $CF_3CH_2$ and $CF_3CCl_2$. The terms "haloalkenyl", "haloalkenyloxy", "haloalkenylthio", "haloalkenyloxyalkyl", "haloalkynyl", "haloalkynyloxy", "haloalkynyloxyalkyl", "haloalkoxy", "haloalkoxyalkyl", "haloalkylthio", "haloalkylsulfinyl", "haloalkylsulfonyl", and the like, are defined analogously to the term "haloalkyl". Examples of "haloalkenyl" include $(Cl)_2C{=}CHCH_2$ and $CF_3CH_2CH{=}CHCH_2$. Examples of "haloalkenyloxy" include $(Cl)_2C{=}CHCH_2O$ and $CF_3CH_2CH{=}CHCH_2O$. Examples of "haloalkenylthio" include $(Cl)_2C{=}CHCH_2S$ and $CF_3CH_2CH{=}CHCH_2S$. Examples of "haloalkenyloxyalkyl" include $(Cl)_2C{=}CHCH_2OCH_2$ and $CF_3CH_2CH{=}CHCH_2OCH_2$. Examples of "haloalkynyl" include $HC{\equiv}CCHCl$, $CF_3C{\equiv}C$, $CCl_3C{\equiv}C$ and $FCH_2C{\equiv}CCH_2$. Examples of "haloalkynyloxy" include $CF_3C{\equiv}CCH_2O$, $CCl_3C{\equiv}CCH_2O$ and $FCH_2C{\equiv}CCH_2O$. Examples of "haloalkynyloxyalkyl" include $CCl_3C{\equiv}CCH_2OCH_2$ and $FCH_2C{\equiv}CCH_2CH_2OCH_2$. Examples of "haloalkoxy" include $CF_3O$, $CCl_3CH_2O$, $HCF_2CH_2CH_2O$ and $CF_3CH_2O$. Examples of "haloalkoxyalkyl" include $CF_3OCH_2$, $CCl_3CH_2OCH_2CH_2$, $HCF_2$ $CH_2CH_2OCH_2$ and $CF_3$ $CH_2OCH_2$. Examples of "haloalkylthio" include $CCl_3S$, $CF_3S$, $CCl_3CH_2S$ and $ClCH_2CH_2CH_2S$. Examples of "haloalkylsulfinyl" include $CF_3S(O)$, $CCl_3S(O)$, $CF_3CH_2S(O)$ and $CF_3CF_2S(O)$. Examples of "haloalkylsulfonyl" include $CF_3S(O)_2$, $CCl_3S(O)_2$, $CF_3CH_2S(O)_2$ and $CF_3CF_2S(O)_2$.

"Alkylcarbonyl" denotes alkyl substituted carbonyl. Examples of "alkylcarbonyl" include $CH_3C(=O)$ and $(CH_3)_2CHC(=O)$. "Alkoxycarbonyl denotes alkoxy substituted carbonyl. Examples of "alkoxycarbonyl" include $CH_3OC(=O)$ and $(CH_3)_2CHOC(=O)$. "Alkylcarbonylamino" denotes alkylcarbonyl substituted on nitrogen. Examples of "alkylcarbonylamino" include $CH_3C(=O)NH$ and $CH_3CH_2C(=O)NH$. "Alkoxycarbonylamino" denotes alkoxycarbonyl substituted on nitrogen. Examples of "alkoxycarbonylamino" include $CH_3OC(=O)NH$ and $CH_3CH_2OC(=O)NH$.

Examples of "trialkylsilyl" include $(CH_3)_3Si$ and $(CH_3)_3CSi(CH_3)_2$. "Trialkylsilylalkyl" denotes trialkylsilyl substitution on alkyl. Examples of "trialkylsilylalkyl" include $(CH_3)_3SiCH_2$, and $(CH_3)_3SiCH_2CH_2$. "Trialkylsilylalkynyl" denotes trialkylsilyl substitution on alkynyl. Examples of "trialkylsilylalkynyl" include $(CH_3)_3SiC{\equiv}C$ and $(CH_3CH_2)SiCH_2C{\equiv}C$. "Trialkylsilylalkoxyalkoxy" denotes trialkylsilyl substitution on alkoxy substituted in turn on alkoxy. Examples of "trialkylsilylalkoxyalkoxy" include $(CH_3)_3SiCH_2OCH_2O$ and $(CH_3)_3SiCH_2CH_2OCH_2O$.

The total number of carbon atoms in a substituent group is indicated by the "$C_i$-$C_j$" prefix where i and j are numbers from 1 to 11. For example, $C_1$-$C_3$ alkylsulfonyl designates methylsulfonyl through propylsulfonyl; $C_2$ alkoxyalkyl designates $CH_3OCH_2$; $C_3$ alkoxyalkyl designates, for example, $CH_3CH(OCH_3)$, $CH_3OCH_2CH_2$ or $CH_3CH_2OCH_2$; and $C_4$ alkoxyalkyl designates the various isomers of an alkyl group substituted with an alkoxy group containing a total of four carbon atoms, examples including $CH_3CH_2CH_2OCH_2$ and $CH_3CH_2OCH_2CH_2$. Examples of "alkylcarbonyl" include $C(O)CH_3$, $C(O)CH_2CH_2CH_3$ and $C(O)CH(CH_3)_2$. Examples of "alkoxycarbonyl" include $CH_3OC(=O)$, $CH_3CH_2OC(=O)$, $CH_3CH_2CH_2OC(=O)$, $(CH_3)_2CHOC(=O)$ and the different butoxy- or pentoxycarbonyl isomers. In the above recitations, when a compound of Formula II is comprised of one or more heterocyclic rings, all substituents are attached to these rings through any available carbon or nitrogen by replacement of a hydrogen on said carbon or nitrogen.

When a compound is substituted with a substituent bearing a subscript that indicates the number of said substituents can exceed 1, said substituents (when they exceed 1) are independently selected from the group of defined substituents. Further, when the subscript indicates a range, e.g., $(R)_{i-j}$, then the number of substituents may be selected from the integers between i and j inclusive.

When a group contains a substituent which can be hydrogen, for example $R^4$, then, when this substituent is taken as hydrogen, it is recognized that this is equivalent to said group being unsubstituted. When a group is optionally substituted with a substituent, for example with $R^7$, then, when the group is not substituted with that substituent, it is recognized that this is equivalent to said group having a hydrogen substituent.

Compounds used in this invention often can exist as one or more stereoisomers. The various stereoisomers include enantiomers, diastereomers, atropisomers and geometric isomers. One skilled in the art will appreciate that one stereoisomer may be more active and/or may exhibit beneficial effects when enriched relative to the other stereoisomer(s) or when separated from the other stereoisomer(s). (See, e.g., U.S. Provisional Patent Application Serial

No. 60/057917 filed September 4, 1997, the priority document of WO99/11129.) Additionally, the skilled artisan knows how to separate, enrich, and/or to selectively prepare said stereoisomers. Accordingly, the present invention comprises compounds selected from Formula II, *N*-oxides and agriculturally suitable salts thereof. The compounds of the invention may be present as a mixture of stereoisomers, individual stereoisomers, or as an optically active form.

The salts of the compounds which may used in the invention include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. The salts of the compounds which may be used in the invention also include those formed with organic bases (e.g., pyridine, ammonia, or triethylamine) or inorganic bases (e.g., hydrides, hydroxides, or carbonates of sodium, potassium, lithium, calcium, magnesium or barium) when the compound contains an acidic group such as a carboxylic acid or phenol.

The fungicidal compositions of this invention, in addition to comprising fungicidally effective amounts of the mixtures of the invention, also optionally comprise at least one of a surfactant, a solid diluent or a liquid diluent. The preferred compositions of the present invention are those which comprise the above preferred component (1) and component (2) compounds.

This invention also relates to a method for controlling plant diseases caused by fungal plant pathogens comprising applying to the plant or portion thereof, or to the plant seed or seedling, a fungicidally effective amount of the compositions of the invention (e.g., as a composition described herein). The preferred methods of use include those involving the above preferred compositions.

## The $bc_1$ Complex Fungicides

Compounds of Formula II are known to have a fungicidal mode of action which inhibits the $bc_1$ complex. Methyl (*E*)-2-[[6-(2-cyanophenoxy)-4-pyrimidinyl]oxy]-α-(methoxyimino)benzeneacetate is described as a $bc_1$ complex inhibitor in *Biochemical Society Transactions* 1993, *22*, 68S. Methyl (*E*)-α-(methoxyimino)-2-[(2-methylphenoxy)methyl]benzeneacetate is described as a $bc_1$ complex inhibitor in *Biochemical Society Transactions* 1993, *22*, 64S. (*E*)-2-[(2,5-Dimethylphenoxy)methyl]-α-(methoxyimino)-*N*-methylbenzeneacetamide is described as a $bc_1$ complex inhibitor in *Biochemistry and Cell Biology* 1995, *85*(3), 306-311.

The $bc_1$ complex is sometimes referred to by other names in the biochemical literature, including complex III of the electron transfer chain, and ubihydroquione:cytochrome c oxidoreductase. It is uniquely identified by the Enzyme Commission number EC1.10.2.2. The $bc_1$ complex is described in, for example, *J. Biol. Chem.* 1989, *264*, 14543-38; *Methods Enzymol*. 1986, *126*, 253-71; and references cited therein.

## The Sterol Biosynthesis Inhibitor Fungicides

The compositions of the invention may further comprise a compound that controls fungal disease by inhibiting the sterol biosynthesis pathway. The class of sterol biosynthesis inhibitors includes DMI and non-DMI compounds, that control fungi by inhibiting enzymes in the sterol biosynthesis pathway. DMI fungicides have a common site of action within the fungal sterol biosynthesis pathway; that is, an inhibition of demethylation at position 14 of lanosterol or 24-methylene dihydrolanosterol, which are precursors to sterols in fungi. Compounds acting at this site are often referred to as demethylase inhibitors, DMI fungicides, or DMIs. The demethylase enzyme is sometimes referred to by other names in the biochemical literature, including cytochrome P-450 (14DM). The demethylase enzyme is described in, for example, *J. Biol. Chem.* 1992, *267*, 13175-79 and references cited therein. DMI fungicides fall into several classes: triazoles, imidazoles, pyrimidines, piperazines and pyridines. The triazoles includes bromuconazole, cyproconazole, difenoconazole, diniconazole, epoxiconazole, fenbuconazole, fluquinconazole, flusilazole, flutriafol, hexaconazole, ipconazole, metconazole, penconazole, propiconazole, tebuconazole, tetraconazole, triadimefon, triadimenol, triticonazole and uniconazole. The imidazoles include clotrimazole, econazole, imazalil, isoconazole, miconazole and prochloraz. The pyrimidines include fenarimol, nuarimol and triarimol. The piperazines include triforine. The pyridines include buthiobate and pyrifenox. Biochemical investigations have shown that all of the above mentioned fungicides are DMI fungicides as described by K. H. Kuck, et al. in *Modern Selective Fungicides - Properties, Applications and Mechanisms of Action*, Lyr, H., Ed.; Gustav Fischer Verlag: New York, 1995, 205-258.

The DMI fungicides have been grouped together to distinguish them from other sterol biosynthesis inhibitors, such as, the morpholine and piperidine fungicides. The morpholines and piperidines are also sterol biosynthesis inhibitors but have been shown to inhibit later steps in the sterol biosynthesis pathway. The morpholines include aldimorph, dodemorph, fenpropimorph, tridemorph and trimorphamide. The piperidines include fenpropidin. Biochemical investigations have shown that all of the above mentioned morpholine and piperidine fungicides are sterol biosynthesis inhibitor fungicides as described by K. H. Kuck, et al. in *Modern Selective Fungicides - Properties, Applications and Mechanisms of Action*, Lyr, H., Ed.; Gustav Fischer Verlag: New York, 1995, 185-204.

Synergistic Effects

Fungicides that effectively control plant fungi, particularly wheat powdery mildew (*Erysiphe graminis*) and wheat foot rot (*Pseudocercosporella herpotrichoides*), are in constant demand by growers. Combinations of fungicides are often used to facilitate disease control and to retard resistance development. Mixtures of fungicides may provide significantly better disease control than could be predicted based on the activity of the individual components. This synergism has been described as "the cooperative action of two components of a mixture, such that the total effect is greater or more prolonged than the sum of the effects of the two (or more) taken independently" (see Tames, P. M. L., *Neth. J. Plant Pathology*, (1964), 70, 73-80). It has been demonstrated that compositions containing compounds of Formula Ia and Formula IIa; and Formula Ia, Formula IIa and flusilazole exhibit synergistic effects.

The presence of a synergistic effect between two active ingredients is established with the aid of the Colby equation (see Colby, S. R. In *Calculating Synergistic and AntagonisticResponses of Herbicide Combinations,* Weeds, (1967), 15, 20-22):

$$p = A + B - \left[\frac{A \times B}{100}\right]$$

Using the methods of the Colby, the presence of a synergistic interaction between two active ingredients is established by first calculating the predicted activity, p, of the mixture based on activities of the two components applied alone. If p is lower than the experimentally established effect, synergism has occurred. In the equation above, A is the fungicidal activity in percentage control of one component applied alone at rate x. The B term is the fungicidal activity in percentage control of the second component applied at rate y. The equation estimates p, the fungicidal activity of the mixture of A at rate x with B at rate y if their effects are strictly additive and no interaction has occurred.

The Colby equation for a three way mixture is

$$p = A + B + C + \frac{A \times B \times C}{10000} - \left[\frac{(A \times B) + (A \times C) + (B \times C)}{100}\right]$$

In this application, fungicidal activities provided by compositions of Formula Ia, Formula IIa, and flusilazole alone are compared with that of compositions of the compounds of Formula Ia and Formula IIa together, and compositions of the compounds of Formula Ia, Formula IIa and flusilazole together. Based on the description of synergism developed by Colby, compositions of the present invention are considered to be synergistically useful. Accordingly, this invention provides an improved method of combating fungi, such as wheat powdery mildew (*Erysiphe graminis*), wheat leaf rust (*Puccinia recondita*), wheat foot rot (*Pseudocercosporella herpotrichoides*) and/or wheat glume blotch (*Septoria nodorum*) in crops, especially cereals.

Compositions are provided in accordance with this invention which comprise proportions of component (1) and component (2) which are especially useful for controlling particular fungal diseases. The compositions of this invention are those wherein the mole ratio of component (1) to component (2) is from 30:1 to 1:30. These compositions are considered especially useful for controlling wheat powdery mildew (*Erysiphe graminis*), wheat leaf rust (*Puccinia recondita*), wheat foot rot (*Pseudocercosporella herpotrichoides*) and/or wheat glume blotch (*Septoria nodorum*). Preferred component (1) compounds for these compositions include

6-bromo-3-propyl-2-propyloxy-4(3*H*)-quinazolinone;
6,8-diiodo-3-propyl-2-propyloxy-4(3*H*)-quinazolinone; and
6-iodo-3-propyl-2-propyloxy-4(3*H*)-quinazolinone; with
6-iodo-3-propyl-2-propyloxy-4(3*H*)-quinazolinone being particularly preferred.

Preferredcomponent(2)compoundsforthesecompositionsinclude2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and (*E*)-2-(methoxyimino)-*N*-methyl-2-(2-phenoxyphenyl)acetamide;with2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one being particularly preferred. Preferably, the mole ratio of component (1) to component (2) for these compositions is from about 4:1 to 1:4. Example compositions

of this type include compositions comprising 6-iodo-3-propyl-2-propyloxy-4(3*H*)-quinazolinone and 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one in a mole ratio of the compound of Formula Ia to the compound of Formula IIa of from about 4:1 to 1:4, and compositions comprising 6-iodo-3-propyl-2-propyloxy-4(3*H*)-quinazolinone; 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one; and flusilazole in a mole ratio of the compound of Formula Ia to the compound of Formula IIa plus flusilazole of from about 4:1 to 1:4 and the compound of Formula IIa to flusilazole has a mole ratio of from about 4:1 to 1:4.

This invention also provides a process for controlling at least one plant disease selected from wheat powdery mildew, wheat leaf rust, wheat foot rot, and wheat glume blotch which comprises applying to the plant or portion thereof to be protected, or to the plant seed or seedling to be protected, an effective amount of a fungicidal combination including component (1) and component (2) wherein the mole ratio of component (1) to component (2) is from 30:1 to 1:30 (preferably from 4:1 to 1:4). Component (1) can, for example, be applied at a rate of 0.2 g/ha or more. Typically component (1) is applied at a rate of 100 g/ha. Component (2) may be applied simultaneously (e.g., in the form of a composition comprising component (1) and component (2) in an appropriate mole ratio); or component (1) and component (2) can be applied separately in an appropriate mole ratio (e.g., as a tank mix).

Compositions wherein component (2) is selected from the group consisting of 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and (*E*)-2-(methoxyimino)-*N*-methyl-2-(2-phenoxyphenyl)acetamide; and wherein the mole ratio of component (1) to component (2) is from 4:1 to 1:10 are considered especially useful for controlling wheat powdery mildew. Preferred component (1) compounds for these compositions include 6-bromo-3-propyl-2-propyloxy-4(3*H*)-quinazolinone; 6,8-diiodo-3-propyl-2-propyloxy-4(3*H*)-quinazolinone; and 6-iodo-3-propyl-2-prapyloxy-4(3*H*)-quinazolinone; with 6-iodo-3-propyl-2-propyloxy-4(3*H*)-quinazolinone being particularly preferred. Preferred component (2) compounds for these compositions include 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one. Example compositions of this type include compositions comprising6-iodo-3-propyl-2-propyloxy-4(3*H*)-quinazolinoneand2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one in a mole ratio of the compound of Formula Ia to the compound of Formula IIa of from about 4:1 to 1:4, and compositions comprising 6-iodo-3-propyl-2-propyloxy-4 (3*H*)-quinazolinone; 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one; and flusilazole in a mole ratio of the compound of Formula Ia to the total of the compound of Formula IIa plus flusilazole of from about 4:1 to 1:4 and a mole ratio of the compound of Formula IIa to flusilazole of from about 4:1 to 1:4.

This invention also provides a process for controlling wheat powdery mildew which comprises applying to the plant or portion thereof to be protected, or to the plant seed or seedling to be protected, an effective amount of a fungicidal combination including component (1) and component (2) wherein the mole ratio of component (1) to component (2) is from 4:1 to 1:10 (preferably from about 4:1 to 1:4). Component (1) can, for example, be applied at a rate of 0.2 g/ha or more. Typically component (1) is applied at a rate of 100 g/ha. Component (2) may be applied simultaneously (e.g., in the form of a composition comprising component (1) and component (2) in an appropriate mole ratio); or component (1) and component (2) can be applied separately in an appropriate mole ratio (e.g., as a tank mix).

Compositions wherein component (2) is selected from the group consisting of 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and (*E*)-2-(methoxyimino)-*N*-methyl-2-(2-phenoxyphenyl)acetamide; and wherein the mole ratio of component (1) to component (2) is from 30:1 to 1:30 are considered especially useful for controlling wheat leaf rust. Preferred component (1) compounds for these compositions include 6-bromo-3-propyl-2-propyloxy-4(3*H*)-quinazolinone; 6,8-diiodo-3-propyl-2-propyloxy-4(3*H*)-quinazolinone; and 6-iodo-3-propyl-2-propyloxy-4(3*H*)-quinazolinone; with 6-iodo-3-propyl-2-propyloxy-4(3*H*)-quinazolinone being particularly preferred being particularly preferred. Preferred component (2) compounds for these compositions include 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one. Preferably, the mole ratio of component (1) to component (2) for these compositions if from 4:1 to 1:4.

This invention also provides a process for controlling wheat leaf rust which comprises applying to the plant or portion thereof to be protected, or to the plant seed or seedling to be protected, an effective amount of a fungicidal combination including component (1) and component (2) wherein the mole ratio of component (1) to component (2) is from 30:1 to 1:30 (preferably from 4:1 to 1:4). Component (2) can, for example, be applied at a rate of 12.5 g/ha or more. Typically component (2) is applied at a rate of 160 g/ha. Component (1) may be applied simultaneously (e.g., in the form of a composition comprising component (1) and component (2) in an appropriate mole ratio); or component (1) and component (2) can be applied separately in an appropriate mole ratio (e.g., as a tank mix).

Compositions wherein component (2) is selected from the group consisting of 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and (*E*)-2-(methoxyimino)-*N*-methyl-2-(2-phenoxyphenyl)acetamide; and wherein the mole ratio of

component (1) to component (2) is from about 15:1 to 1:15 are considered especially useful for controlling wheat foot rot. Preferred component (1) compounds for these compositions include

6-bromo-3-propyl-2-propyloxy-4(3*H*)-quinazolinone;
6,8-diiodo-3-propyl-2-propyloxy-4(3*H*)-quinazolinone; and
6-iodo-3-propyl-2-propyloxy-4(3*H*)-quinazolinone; with
6-iodo-3-propyl-2-propyloxy-4(3*H*)-quinazolinone being particularly preferred being particularly preferred. Preferably, the mole ratio of component (1) to component (2) for these compositions if from about 4:1 to 1:4.

This invention also provides a process for controlling wheat foot rot which comprises applying to the plant or portion thereof to be protected, or to the plant seed or seedling to be protected, an effective amount of a fungicidal combination including component (1) and component (2) wherein the mole ratio of component (1) to component (2) is from about 15:1 to 1:15 (preferably from about 4:1 to 1:4). Component (1) can, for example, be applied at a rate of 5 g/ha or more. Typically component (1) is applied at a rate of 100 g/ha. Component (2) may be applied simultaneously (e.g., in the form of a composition comprising component (1) and component (2) in an appropriate mole ratio); or component (1) and component (2) can be applied separately in an appropriate mole ratio (e.g., as a tank mix).

Compositions wherein component (2) is selected from the group consisting of 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and (*E*)-2-(methoxyimino)-*N*-methyl-2-(2-phenoxyphenyl)acetamide; and wherein the mole ratio of component (1) to component (2) is from 30:1 to 1:30 are considered especially useful for controlling wheat glume blotch. Preferred component (1) compounds for these compositions include

6-bromo-3-propyl-2-propyloxy-4(3*H*)-quinazolinone;
6,8-diiodo-3-propyl-2-propyloxy-4(3*H*)-quinazolinone; and
6-iodo-3-propyl-2-propyloxy-4(3*H*)-quinazolinone; with
6-iodo-3-propyl-2-propyloxy-4(3*H*)-quinazolinone being particularly preferred being particularly preferred. Preferably, the mole ratio of component (1) to component (2) for these compositions if from about 4:1 to 1:4.

This invention also provide a process for controlling wheat glume blotch which comprises applying to the plant or portion thereof to be protected, or to the plant seed or seedling to be protected, an effective amount of a fungicidal combination including component (1) and component (2) wherein the mole ratio of component (1) to component (2) is from 30:1 to 1:30 (preferably from about 4:1 to 1:4). Component (2) can, for example, be applied at 12.5 g/ha or more. Typically component (2) is applied at a rate of 160 g/ha. Component (1) may be applied simultaneously (e.g., in the form of a composition comprising component (1) and component (2) in an appropriate mole ratio); or component (1) and component (2) can be applied separately in an appropriate mole ratio, e.g., as a tank mix.

<u>Synthesis of Compounds of Formula I</u>

The compounds of Formula I where D is O can be prepared as described in International Patent Application WO 94/26722 and as shown in Scheme 1.

An anthranilic acid (2-aminobenzoic acid) of Formula 1 is condensed with an isothiocyanate of Formula $R^1$-NCS to form the 2-thioquinazolinedione of Formula 2. This condensation is preferably performed in the presence of a base such as triethylamine. *S*-Methylation of this compound affords the 2-methylthio-4(3H)-quinazolinone of Formula 3.

For the introduction of the $R^2O$ group, the 2-methylthio-4(3*H*)-quinazolinone of Formula 3 is treated with a mixture of a base, for example sodium hydride, in $R^2OH$ solvent. The reaction mixture is stirred at a temperature from about 0 °C to 120 °C for 1-120 hours. The desired 2-$R^2O$-4(3H)-quinazolinone can be isolated from the reaction mixture by extraction into a water-immiscible solvent, and purified by chromatography or recrystallization. Similar synthetic procedures are described in U.S. 3,755,582.

Scheme 1

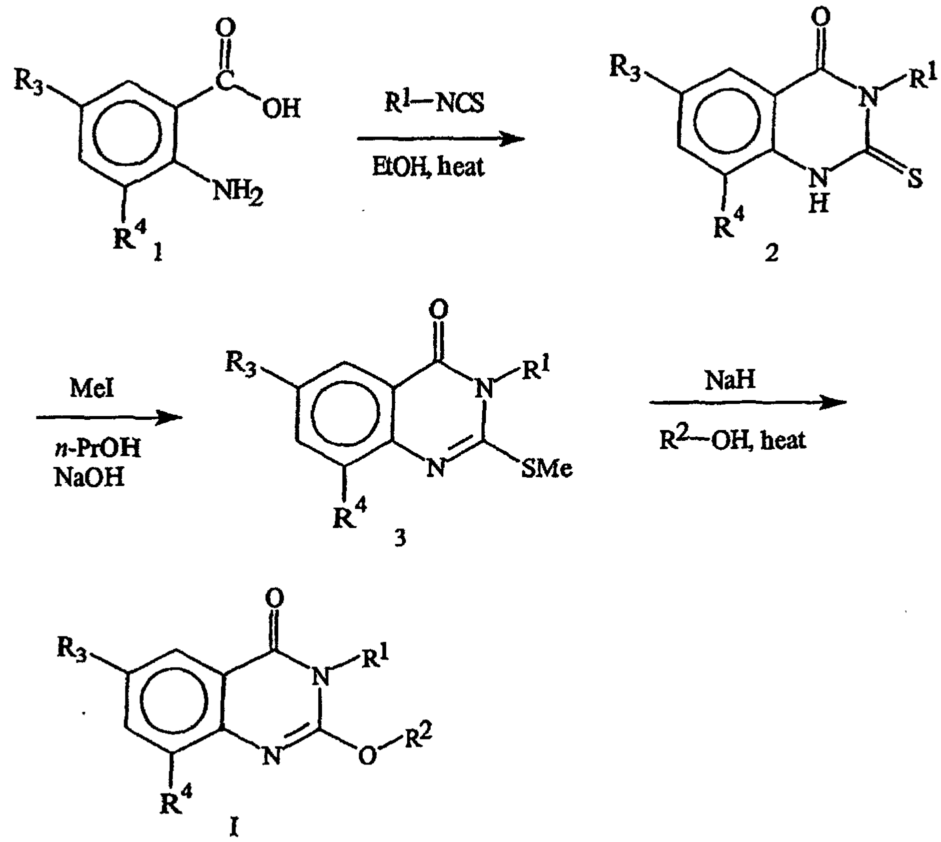


Anthranilic acids of Formula 1 are known or can be prepared by known methods. For example see, March, *J. Advanced Organic Chemistry;* 3rd ed., John Wiley: New York, (1985), p 983. The isothiocyanates of Formula $R^1$-NCS can be prepared from the corresponding amine by treatment with thiophosgene as known in the art. For example, see *J. Heterocycl. Chem.*, (1990), *27*, 407.

6-Iodo-3-propyl-2-propyloxy-4(3*H*)-quinazolinone, Formula Ia, is a compound of Formula I where D is O, $R^1$ is propyl, $R^2$ is propyl, $R^3$ is iodine and $R^4$ is hydrogen.

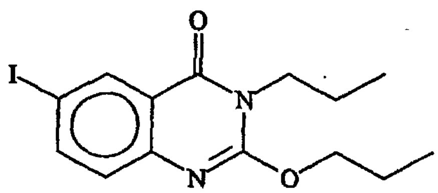

**Ia**

Synthesis of Compounds of Formula II

Compounds of Formula II where Q is Q-1 and X is $OR^{11}$ can be prepared as described in International Patent Application WO 95/14009 by treating a compound of Formula 4 with an appropriate alkyl transfer reagent in an inert solvent with or without additional acidic or basic reagents or other reagents (Scheme 2). Suitable solvents are selected from the group consisting of polar aprotic solvents such as acetonitrile, dimethylformamide or dimethylsulfoxide; ethers such as tetrahydrofuran, dimethoxyethane, or diethyl ether; ketones such as acetone or 2-butanone; hydrocarbons such as toluene or benzene; and halocarbons such as dichloromethane or chloroform.

Scheme 2

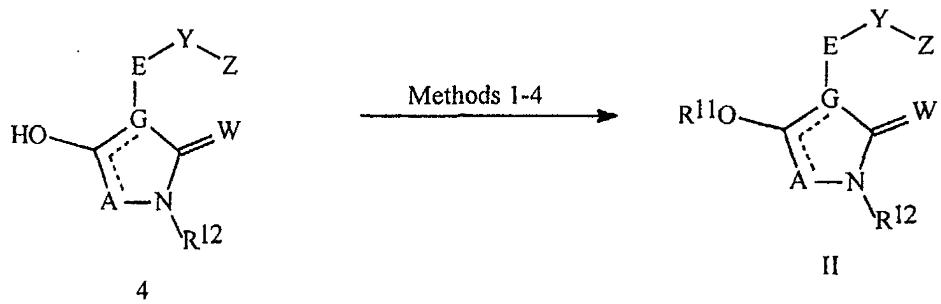


4

II

Method 1: $V\text{-}CH{=}N_2$ ($V = H$ or $(CH_3)_3Si$)
5

Method 2: 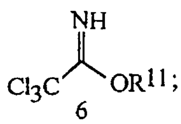 ; Lewis acid
6

Method 3: $(R^{11})_3O^+ BF_4^-$
7

Method 4: $(R^{11})_2SO_4$; $R^{11}OSO_2V$; or $R^{11}$-hal; optional base

(hal = F, Cl, Br, or I)
($V = C_1\text{-}C_6$ alkyl, $C_1\text{-}C_6$ haloalkyl)

For example, compounds of Formula II where Q is Q-1 and X is $OR^{11}$ can be prepared by the action of diazoalkane reagents of Formula 5 such as diazomethane (V = H) or trimethylsilyldiazomethane ($V = (CH_3)_3Si$) on of Formula 4 (Method 1). Use of trimethylsilyldiazomethane requires a protic cosolvent such as methanol. For examples of these procedures, see *Chem. Pharm. Bull.*, (1984), *32,* 3759.

As indicated in Method 2, compounds of Formula II where Q is Q-1 and X is $OR^{11}$ can also be prepared by contacting compounds of Formula 4 with alkyl trichloroacetimidates of Formula 6 and a Lewis acid catalyst. Suitable Lewis acids include trimethylsilyl triflate and tetrafluoroboric acid. The alkyl trichloroacetimidates can be prepared from the appropriate alcohol and trichloroacetonitrile as described in the literature (J. Danklmaier and H. Hönig, *Synth. Commun.*, (1990), 20, 203).

Compounds of Formula II where Q is Q-1 and X is $OR^{11}$ can also be prepared from compounds of Formula 4 by treatment with a trialkyloxonium tetrafluoroborate (i.e., Meerwein's salt) of Formula 7 (Method 3). The use of trialkyloxonium salts as powerful alkylating agents is well known in the art (see U. Schöllkopf, U. Groth, C. Deng, *Angew. Chem., Int. Ed. Engl.,* (1981), *20*, 798).

Other alkylating agents which can convert compounds of Formula 4 to compounds of Formula II where Q is Q-1 and X is $OR^{11}$ are dialkyl sulfates such as dimethyl sulfate, haloalkyl sulfonates such as methyl trifluoromethanesulfonate, and alkyl halides such as iodomethane and propargyl bromide (Method 4). These alkylations can be conducted with or without additional base. Appropriate bases include alkali metal alkoxides such as potassium tert-butoxide, inorganic bases such as sodium hydride and potassium carbonate, or tertiary amines such as triethylamine,

pyridine, 1,8-diazabicyclo[5.4.0]undec-7-ene (DBU), and triethylenediamine. See R. E. Benson, T. L. Cairns, *J. Am. Chem.* Soc., (1948), *70*, 2115 for alkylation examples using agents of this type.

Compounds of Formula II where Q is Q-1 and X is $OR^{11}$ can also be prepared by reaction of Formula 8 compounds with alkali metal alkoxides ($R^{11}O^-M^+$) (Scheme 3). The leaving group $Lg^1$ in the amides of Formula 8 are any group known in the art to undergo a displacement reaction of this type. Examples of suitable leaving groups include chlorine, bromine, and sulfonyl and sulfonate groups. Examples of suitable inert solvents are dimethylformamide or dimethylsulfoxide.

Scheme 3

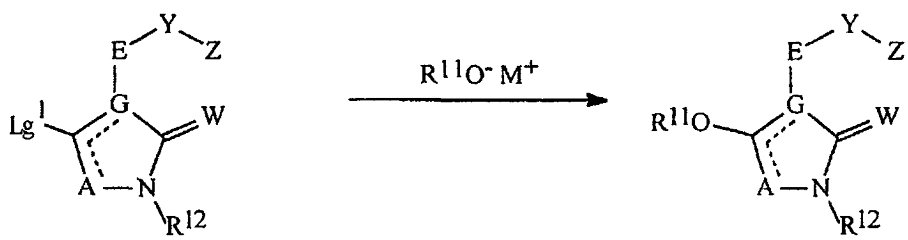


8 II

$Lg^1$ = Cl, Br, $-SO_2V$ or $-OSO_2V$

V = $C_1$–$C_6$ alkyl or $C_1$–$C_6$ haloalkyl

M = K or Na

2,4-Dihydro-5-methoxy-2-methyl-4-[2-[[[[ 1-[3-(trifluoromethyl)phenyl]ethylidene]amino]oxy]methyl]phenyl]-3*H*-1,2,4-triazol-3-one, Formula IIa, is a compound of Formula II where Q is Q-1, E is 1,2-phenylene, A is N, G is N with the floating double bond attached to A, W is O, X is $OR^{11}$, $R^{11}$ is $CH_3$, $R^{12}$ is $CH_3$, Y is $-CHR^{25}O-N=C(R^{17})-$, $R^{17}$ is $CH_3$, $R^{25}$ is H, Z is phenyl substituted with $R^{19}$ and $R^{19}$ is $CF_3$ fixed in the 3 position.

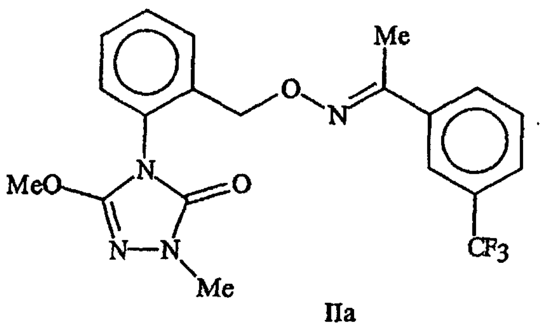

IIa

Azoxystrobin, Formula IIb, is a compound of Formula II where Q is Q-2, E is 1,2 phenylene, $W^1$ is O, $X^1$ is C, Y is -O-, Z is 4,6-pyrimidinyl substituted with $R^{19}$, $R^{19}$ is phenoxy substituted with $R^{21}$ and $R^{21}$ is cyano fixed in the 2 position.

Kresoxim-methyl, Formula IIc, is a compound of Formula II where Q is Q-2, E is 1,2-phenylene, $W^1$ is O, $X^1$ is N, Y is $-CHR^{25}O-$, $R^{25}$ is H, Z is phenyl substituted with $R^{19}$ and $R^{19}$ is $CH_3$ fixed in the 2 position.

(*E*)-2-(methoxyimino)-*N*-methyl-2-(2-phenoxyphenyl)acetamide, Formula IId, is a compound of Formula II where Q is Q-2, E is 1,2-phenylene, $W^1$ is NH, $X^1$ is N, Y is -O-, Z is phenyl substituted with $R^{19}$ wherein $R^{19}$ is H.

Without further elaboration, it is believed that one skilled in the art using the preceding description can utilize the present invention to its fullest extent. The following Examples are, therefore, to be construed as merely illustrative.

Formulation/Utility

The fungicidal compositions of the present invention comprise an effective amount of a mixture of the compounds(s) of component (1) (e.g., 6-iodo-3-propyl-2-propyloxy-4(3*H*)-quinazolinone) and the compound(s) of component (2) (e.g., 2,4-dihydro-5-methoxy-2-methyl-4-[2-[[[[1-[3-(trifluoromethyl)phenyl]ethylidene]amino]oxy]methyl]phenyl]-3*H*-1,2,4-triazol-3-one, kresoxim-methyl, azoxystrobin, and/or (*E*)-2-(methoxyimino)-*N*-methyl-2-(2-phenoxyphenyl)acetamide). The mixtures of this invention will typically be used as a formulation or composition with an agriculturally suitable carrier comprising at least one of a liquid diluent, a solid diluent or a surfactant. The formulation or composition ingredients are selected to be consistent with the physical properties of the active ingredient, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredient can be (micro)encapsulated and further formed into a suspension or solid formulation; alternatively the entire formulation of active ingredient can be encapsulated (or "overcoated"). Encapsulation can control or delay release of the active ingredient. Sprayable formulations can be extended in suitable media and used at spray volumes from about one to several hundred liters per hectare. High-strength compositions are primarily used as intermediates for further formulation.

The formulations will typically contain effective amounts of active ingredients, diluent and surfactant within the following approximate ranges which add up to 100 percent by weight.

| | | Weight Percent | |
|---|---|---|---|
| | Active Ingredients | Diluent | Surfactant |
| Water-Dispersible and Water-soluble Granules, Tablets and Powders. | 5-90 | 0-94 | 1-15 |
| Suspensions, Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers,* 2nd Ed., Dorland Books, Caldwell, New Jersey. Typical liquid diluents are described in Marsden, *Solvents Guide,* 2nd Ed., Interscience, New York, 1950. *McCutcheon's Detergents and Emulsifiers Annual*, Allured Publ. Corp., Ridgewood, New Jersey, as well as Sisely and Wood, *Encyclopedia of Surface Active Agents,* Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N,N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N,N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", *Chemical Engineering,* December 4, 1967, pp 147-48, *Perry's Chemical Engineer's Handbook*, 4th Ed., McGraw-Hill, New York, 1963, pages 8-57 and following, and International Patent Publication WO 91/13546. Pellets can be prepared as described in U.S. Patent No. 4,172,714. Water-dispersible and water-soluble granules can be prepared as taught in U.S. Patent No. 4,144,050, U.S. Patent No, 3,920,442 and German Patent Application DE 3,246,493. Tablets can be prepared as taught in U.S. Patent No. 5,180,587, U.S. Patent No. 5,232,701 and U.S. Patent No. 5,208,030. Films

can be prepared as taught in Great Britain Patent Application GB 2,095,558 and U.S. Patent No. 3,299,566.

For further information regarding the art of formulation, see U.S. Patent No. 3,235,361, Col. 6, line 16 through Col. 7, line 19 and Examples 10-41; U.S. Patent No. 3,309,192, Col. 5, line 43 through Col. 7, line 62 and Examples 8, 12, 15, 39, 41, 52, 53, 58, 132, 138-140, 162-164, 166, 167 and 169-182; U.S. Patent No. 2,891,855, Col. 3, line 66 through Col. 5, line 17 and Examples 1-4; Klingman, *Weed Control as a Science,* John Wiley and Sons, Inc., New York, 1961, pp 81-96; and Hance et al., *Weed Control Handbook*, 8th Ed., Blackwell Scientific Publications, Oxford, 1989.

In the following Examples, all percentages are by weight and all formulations are prepared in conventional ways.

Example A

| Wettable Powder | |
|---|---|
| Active ingredient(s) | 65.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example B

| Granule | |
|---|---|
| Active ingredient(s) | 10.0% |
| attapulgite granules (low volatile matter, 0.71/0.30 mm; U.S.S. No. 25-50 sieves) | 90.0%. |

Example C

| Extruded Pellet | |
|---|---|
| Active ingredient(s) | 25.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example D

| Emulsifiable Concentrate | |
|---|---|
| Active ingredient(s) | 20.0% |
| blend of oil soluble sulfonates and polyoxyethylene ethers | 10.0% |
| isophorone | 70.0%. |

The compounds of this invention are useful as plant disease control agents. The present invention therefore further comprises a method for controlling plant diseases caused by fungal plant pathogens comprising applying to

the plant or portion thereof to be protected, or to the plant seed or seedling to be protected, an effective amount of a compound of the invention or a fungicidal composition containing said compound. The compounds and compositions of this invention provide control of diseases caused by a broad spectrum of fungal plant pathogens in the Basidiomycete, Ascomycete, Oomycete and Deuteromycete classes. They are effective in controlling a broad spectrum of plant diseases, particularly foliar pathogens of ornamental, vegetable, field, cereal, and fruit crops. These pathogens include *Plasmopara viticola, Phytophthora infestans, Peronospora tabacina, Pseudoperonospora cubensis, Pythium aphanidermatum, Alternaria brassicae, Septoria nodorum, Septoria tritici, Cercosporidium personatum, Cercospora arachidicola, Pseudocercosporella herpotrichoides, Cercospora beticola, Botrytis cinerea, Monilinia fructicola, Pyricularia oryzae, Podosphaera leucotricha, Venturia inaequalis, Erysiphe graminis, Uncinula necatur, Puccinia recondita, Puccinia graminis, Hemileia vastatrix, Puccinia striiformis, Puccinia arachidis, Rhizoctonia solani, Sphaerotheca fuliginea, Fusarium oxysporum, Verticillium dahliae, Pythium aphanidermatum, Phytophthora megasperma, Sclerotinia sclerotiorum*, *Sclerotium rolfsii, Erysiphe polygoni, Pyrenophora teres, Gaeumannomyces graminis, Rynchosporium secalis, Fusarium roseum, Bremia lactucae* and other generea and species closely related to these pathogens.

Mixtures of this invention can be further mixed with one or more other insecticides, fungicides, nematocides, bactericides, acaricides, growth regulators, chemosterilants, semiochemicals, repellents, attractants, pheromones, feeding stimulants or other biologically active compounds to form a multi-component pesticide giving an even broader spectrum of agricultural protection. Examples of such agricultural protectants with which compounds of this invention can be formulated are: insecticides such as abamectin, acephate, azinphos-methyl, bifenthrin, buprofezin, carbofuran, chlorfenapyr, chlorpyrifos, chlorpyrifos-methyl, cyfluthrin, beta-cyfluthrin, cyhalothrin, lambda-cyhalothrin, deltamethrin, diafenthiuron, diazinon, diflubenzuron, dimethoate, esfenvalerate, fenoxycarb, fenpropathrin, fenvalerate, fipronil, flucythrinate, tau-fluvalinate, fonophos, imidacloprid, isofenphos, malathion, metaldehyde, methamidophos, methidathion, methomyl, methoprene, methoxychlor, methyl 7-chloro-2,5-dihydro-2-[[*N*-(methoxycarbonyl)-*N*-[4-(trifluoromethoxy)phenyl]amino]carbonyl]indeno[1,2-*e*][1,3,4]oxadiazine-4a(3*H*)-carboxylate (DPX-JW062), monocrotophos, oxamyl, parathion, parathion-methyl, permethrin, phorate, phosalone, phosmet, phosphamidon, pirimicarb, profenofos, rotenone, sulprofos, tebufenozide, tefluthrin, terbufos, tetrachlorvinphos, thiodicarb, tralomethrin, trichlorfon and triflumuron; fungicides such as benomyl, blasticidin-S, Bordeaux mixture (tribasic copper sulfate), captafol, captan, carbendazim, chloroneb, chlorothalonil, copper oxychloride, copper salts, cymoxanil, cyprodinil (CGA 219417), diclomezine, dicloran, dimethomorph, dodine, edifenphos, famoxadone, fenpiclonil, fluazinam, flutolanil, folpet, fosetyl-aluminum, furalaxyl, iprobenfos, iprodione, isoprothiolane, kasugamycin, mancozeb, maneb, mepronil, metalaxyl, *S*-methyl 7-benzothiazolecarbothioate (CGA 245704), myclobutanil, neo-asozin (ferric methanearsonate), oxadixyl, pencycuron, probenazole, prochloraz, pyrifenox, pyroquilon, quinoxyfen, spiroxamine (KWG4168), sulfur, thiabendazole, thiophanate-methyl, thiram, tricyclazole, validamycin and vinclozolin; nematocides such as aldoxycarb and fenamiphos; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; and biological agents such as *Bacillus thuringiensis, Bacillus thuringiensis* delta endotoxin, baculovirus, and entomopathogenic bacteria, virus and fungi.

In certain instances, combinations with other fungicides having a similar spectrum of control but a different mode of action will be particularly advantageous for resistance management

Plant disease control is ordinarily accomplished by applying an effective amount of the composition of this invention either pre— or post—infection, to the portion of the plant to be protected such as the roots, stems, foliage, fruit, seeds, tubers or bulbs, or to the media (soil or sand) in which the plants to be protected are growing. The composition can also be applied to the seed to protect the seed and seedling.

Rates of application for this composition can be influenced by many factors of the environment and should be determined under actual use conditions. Foliage can normally be protected when treated at a rate of from less than 1 g/ha to 5,000 g/ha of aggregate active ingredient. Aggregate active ingredient is defined as the total combined weight of active ingredients. Seed and seedlings can normally be protected when seed is treated at a rate of from 0.1 to 10 g of aggregate active ingredient per kilogram of seed.

The following Examples demonstrate the composition and method of the present invention and provide experimental evidence for synergy between the compounds of Formula Ia, Formula IIa and flusilazole in preventative control of wheat foot rot. The experimental also provides evidence for synergy between the compounds of Formula Ia, IIa and flusilazole in curative control of wheat powdery mildew. The pathogen control protection afforded by these compositions is not limited, however, to these species.

The following TESTS demonstrate the control efficacy of compounds of this invention on specific pathogens. The pathogen control protection afforded by the compounds is not limited, however, to these species.

## BIOLOGICAL EXAMPLES OF THE INVENTION

Test compounds were first dissolved in acetone in an amount equal to 50% of the final volume and then

suspended at a concentrations from 0.08 to 200 ppm in purified water containing 250 ppm of the surfactant Trem® 014 (polyhydric alcohol esters). The resulting test suspensions were then used in the following test protocols. Spraying these test suspensions to the point of run-off on the test plants is the equivalent of a rate of 500 g/ha.

Protocol # 1 - WPM Preventive

The test compounds were sprayed to the point of run-off on wheat seedlings. The following day the seedlings were inoculated with a spore dust of *Erysiphe graminis f. sp. tritici*, (the causal agent of wheat powdery mildew). Seedlings were incubated in a growth chamber at 20 °C for 6 days, after which disease ratings were made.

Protocol # 2 - WPM Curative

Wheat seedlings were inoculated with a spore dust of *Erysiphe graminis f. sp. tritici,* (the causal agent of wheat powdery mildew). The following day a test compounds were sprayed to the point of run-off on and seedlings incubated in a growthchamber at 20 °C for 7 days, after which disease ratings were made.

Protocol # 3 WLR Preventive

The test compounds were sprayed to the point of run-off on wheat seedlings. The following day the seedlings were inoculated with a spore suspension of *Puccinia recondita* (the causal agent of wheat leaf rust) and incubated in a saturated atmosphere at 20 °C for 24 h, and then moved to a growth chamber at 20 °C for 6 days, after which disease ratings were made.

Protocol # 4 - WLR Curative

Wheat seedlings were inoculated with a spore suspension of *Puccinia recondita* (the causal agent of wheat leaf rust). The following day the test compounds were sprayed to the point of run-off on and incubated in a saturated atmosphere at 20 °C for 24 h, then moved to a growth chamber at 20 °C for 6 days, after which disease ratings were made.

Protocol # 5 - WFR Preventive

The test compounds were sprayed to the point of run-off on wheat seedlings. The following day the seedlings were inoculated with a spore suspension of *Pseudocercosporella herpotrichoides* (the causal agent of wheat eye spot or wheat foot rot) and incubated in a saturated atmosphere at 20 °C for 72 h, and then moved to a growth chamber at 20 °C for 6 days, after which disease ratings were made.

Protocol # 6 - WGB Preventive

The test compounds were sprayed to the point of run-off on wheat seedlings. The following day the seedlings were inoculated with a spore suspension of *Septoria nodorum* (the causal agent of wheat glume blotch) and incubated in a saturated atmosphere at 20 °C for 48 h, and then moved to a growth chamber at 20 °C for 6 days, after which disease ratings were made.

Protocol # 7 - WGB Curative

Wheat seedlings were inoculated with a spore suspension *Septoria nodorum* (the causal agent of wheat glume blotch). Two days later test compounds were sprayed to the point of run-off on and seedlings incubated in a saturated atmosphere at 20 °C for 48 h, then moved to a growth chamber at 20 °C for 6 days, after which disease ratings were made.

Protocol # 8 - WPM Preventative

The test suspension was sprayed to the point of run-off on wheat seedlings. The following day the seedlings were inoculated with a spore dust of *Erysiphe graminis f. sp. tritici*, (the causal agent of wheat powdery mildew) and incubated in a growth chamber at 20 °C for 7 days, after which disease ratings were made.
Results for protocols 1 - 8 are given in Tables C-F. In the tables, a rating of 100 indicates 100% disease control and a rating of 0 indicates no disease control (relative to the controls). An (nt) indicates no test results and (--) indicates

no estimate of activity. In Tables C-F rates are given in parts per million (ppm) and/or grams active ingredient per hectare (g a.i./ha). The term "Actual" stands for the experimental value. The abbreviation "Exp." stands for "Expected" (i.e., the predicted activity, p, from the Colby equation).

TABLE C

Synergistic Effects of Compound Ia in Combination with Compound IIa for Preventive Control of Wheat Powdery Mildew (WPM), Wheat Leaf Rust (WLR), Wheat Foot Rot (WFR) and Wheat Glume Blotch (WGB)

| Test Cmpd 1 | Test Cmpd 2 | Test Cmpd 3 | Rates (ppm) | Rates (g a.i./ha) | Mole Ratio | WPM(1) Actual | WPM(1) Exp. | WLR(2) Actual | WLR(2) Exp. | WFR(3) Actual | WFR(3) Exp. | WGB(4) Actual | WGB(4) Exp. |
|---|---|---|---|---|---|---|---|---|---|---|---|---|---|
| Ia | -- | -- | 0.08 | 0.2 | | 100 | -- | 0 | -- | 0 | -- | 0 | -- |
| Ia | -- | -- | 0.4 | 1 | | 100 | -- | 9 | -- | 0 | -- | 0 | -- |
| Ia | -- | -- | 2 | 5 | | 100 | -- | 0 | -- | 0 | -- | 0 | -- |
| IIa | -- | -- | 0.08 | 0.2 | | 60 | -- | 54 | -- | 8 | -- | 0 | -- |
| IIa | -- | -- | 0.4 | 1 | | 88 | -- | 91 | -- | 26 | -- | 0 | -- |
| IIa | -- | -- | 2 | 5 | | 100 | -- | 99 | -- | 38 | -- | 0 | -- |
| IIa | Ia | -- | 0.08 + 0.08 | 0.2 + 0.2 | 1:1.13 | 99 | 100 | 54 | 54 | 0 | 8 | 0 | 0 |
| IIa | Ia | -- | 0.4 + 0.4 | 1 + 1 | 1:1.13 | 100 | 100 | 93 | 92 | 8 | 26 | 0 | 0 |
| IIa | Ia | -- | 2 + 2 | 5 + 5 | 1:1.13 | 100 | 100 | 99 | 91 | 61 | 38 | 0 | 0 |

(1) Wheat powdery mildew activity - Protocol #1

(2) Wheat leaf rust activity - Protocol # 3

(3) Wheat foot rot activity - Protocol # 5

(4) Wheat glume blotch activity - Protocol # 6

TABLE D

Synergistic Effects of Compound Ia in Combination with Compound IIa on Curative Control of Wheat Powdery Mildew (WPM), Wheat Leaf Rust (WLR) and Wheat Glume Blotch (WGB)

| | | | | | | Percent Disease Control | | | | | |
|---|---|---|---|---|---|---|---|---|---|---|---|
| Test | Test | Test | Rates | Rates | Mole | WPM(1) | | WLR(2) | | WGB(3) | |
| Cmpd 1 | Cmpd 2 | Cmpd 3 | (ppm) | (g a.i./ha) | Ratio | Actual | Exp. | Actual | Exp. | Actual | Exp. |
| Ia | -- | -- | 0.08 | 0.2 | | 0 | -- | 0 | -- | 0 | -- |
| Ia | -- | -- | 0.4 | 1 | | 56 | -- | 0 | -- | 0 | -- |
| Ia | -- | -- | 2 | 5 | | 60 | -- | 0 | -- | 10 | -- |
| IIa | -- | -- | 0.08 | 0.2 | | 0 | -- | 0 | -- | 13 | -- |
| IIa | -- | -- | 0.4 | 1 | | 73 | -- | 0 | -- | 0 | -- |
| IIa | -- | -- | 2 | 5 | | 100 | -- | 0 | -- | 13 | -- |
| IIa | Ia | -- | 0.08 + 0.08 | 0.2 + 0.2 | 1:1.13 | 21 | 0 | 0 | 0 | 0 | 13 |
| IIa | Ia | -- | 0.4 + 0.4 | 1 + 1 | 1:1.13 | 99 | 88 | 0 | 0 | 13 | 0 |
| IIa | Ia | -- | 2 + 2 | 5 + 5 | 1:1.13 | 100 | 100 | 0 | 0 | 53 | 22 |

(1) Wheat powdery mildew - Protocol # 2

(2) Wheat leaf rust - Protocol # 4

(3) Wheat glume blotch - Protocol # 7

TABLE E

Synergistic Effects of Compound Ia / Compound IIa / Flusilazole combinations for Preventive Control of Wheat Powdery Mildew (WPM), Wheat Leaf Rust (WLR), Wheat Foot Rot (WFR) and Wheat Glume Blotch (WGB)

| Test Cmpd 1 | Test Cmpd 2 | Test Cmpd 3 | Rates (ppm) | Rates (g a.i./ha) | Mole Ratio | Percent Disease Control WPM[(1)] Actual | WPM[(1)] Exp. | WLR[(2)] Actual | WLR[(2)] Exp. | WFR[(3)] Actual | WFR[(3)] Exp. | WGB[(4)] Actual | WGB[(4)] Exp. |
|---|---|---|---|---|---|---|---|---|---|---|---|---|---|
| Ia | -- | -- | 0.08 | 0.2 | | 100 | -- | 0 | -- | 0 | -- | 0 | -- |
| Ia | -- | -- | 0.4 | 1 | | 100 | -- | 9 | -- | 0 | -- | 0 | -- |
| Ia | -- | -- | 2 | 5 | | 100 | -- | 0 | -- | 0 | -- | 0 | -- |
| IIa | -- | -- | 0.08 | 0.2 | | 60 | -- | 54 | -- | 8 | -- | 0 | -- |
| IIa | -- | -- | 0.4 | 1 | | 88 | -- | 91 | -- | 26 | -- | 0 | -- |
| IIa | -- | -- | 2 | 5 | | 100 | -- | 99 | -- | 38 | -- | 0 | -- |
| Flusilazole | -- | -- | 0.08 | 0.2 | | 90 | -- | 18 | -- | 16 | -- | 0 | -- |
| Flusilazole | -- | -- | 0.4 | 1 | | 99 | -- | 9 | -- | 54 | -- | 0 | -- |
| Flusilazole | -- | -- | 2 | 5 | | 100 | -- | 88 | -- | 45 | -- | 0 | -- |
| Flusilazole | Ia | IIa | 0.08 + 0.08 + 0.08 | 0.2 + 0.2 + 0.2 | 1.33:1.13:1 | 100 | 100 | 28 | 62 | 8 | 16 | 0 | 0 |
| Flusilazole | Ia | IIa | 0.4 + 0.4 + 0.4 | 1 + 1 + 1 | 1.33:1.13:1 | 100 | 100 | 93 | 100 | 62 | 54 | 0 | 0 |
| Flusilazole | Ia | IIa | 2 + 2 + 2 | 5 + 5 + 5 | 1.33:1.13:1 | 100 | 100 | 99 | 100 | 100 | 45 | 47 | 0 |

(1) Wheat powdery mildew activity - Protocol #1
(2) Wheat leaf rust activity - Protocol # 3
(3) Wheat foot rot activity - Protocol # 5
(4) Wheat glume blotch activity - Protocol # 6

TABLE F

Synergistic Effects of Compound Ia / Compound IIa / Flusilazole on Curative Control of Wheat Powdery Mildew (WPM), Wheat Leaf Rust (WLR) and Wheat Glume Blotch (WGB)

| | | | | | | Percent Disease Control | | | | | |
|---|---|---|---|---|---|---|---|---|---|---|---|
| Test | Test | Test | Rates | Rates | Mole | WPM(1) | | WLR(2) | | WGB(3) | |
| Cmpd 1 | Cmpd 2 | Cmpd 3 | (ppm) | (g a.i./ha) | Ratio | Actual | Exp. | Actual | Exp. | Actual | Exp. |
| Ia | -- | -- | 0.08 | 0.2 | | 0 | -- | 0 | -- | 0 | -- |
| Ia | -- | -- | 0.4 | 1 | | 56 | -- | 0 | -- | 0 | -- |
| Ia | -- | -- | 2 | 5 | | 60 | -- | 0 | -- | 10 | -- |
| IIa | -- | -- | 0.08 | 0.2 | | 0 | -- | 0 | -- | 13 | -- |
| IIa | -- | -- | 0.4 | 1 | | 73 | -- | 0 | -- | 0 | -- |
| IIa | -- | -- | 2 | 5 | | 100 | -- | 0 | -- | 13 | -- |
| Flusilazole | -- | -- | 0.08 | 0.2 | | 68 | -- | 0 | -- | 0 | -- |
| Flusilazole | -- | -- | 0.4 | 1 | | 73 | -- | 0 | -- | 0 | -- |
| Flusilazole | -- | -- | 2 | 5 | | 100 | -- | 80 | -- | 0 | -- |
| Flusilazole | Ia | IIa | 0.08 + 0.08 + 0.08 | 0.2 + 0.2 + 0.2 | 1.33:1.13:1 | 96 | 68 | 0 | 0 | 40 | 13 |
| Flusilazole | Ia | IIa | 0.4 + 0.4 + 0.4 | 1 + 1 + 1 | 1.33:1.13:1 | 100 | 100 | 0 | 0 | 0 | 0 |
| Flusilazole | Ia | IIa | 2 + 2 + 2 | 5 + 5 + 5 | 1.33:1.13:1 | 100 | 100 | 86 | 80 | 13 | 22 |

(1) Wheat powdery mildew - Protocol # 2

(2) Wheat leaf rust - Protocol # 4

(3) Wheat glume blotch - Protocol # 7

## Claims

1. A fungicidal composition comprising:

(1) at least one quinazolinone of Formula I including all geometric and stereoisomers, *N*-oxides, and agriculturally suitable salts thereof,

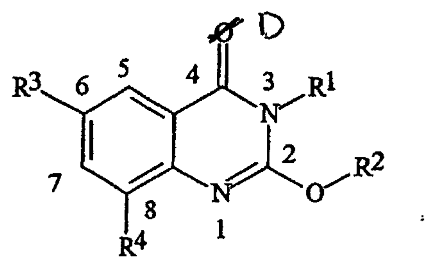

wherein

D is O or S;
$R^1$ is $C_1$-$C_6$ alkyl;
$R^2$ is $C_1$-$C_6$ alkyl;
$R^3$ is halogen; and
$R^4$ is hydrogen or halogen;

(2) at least one compound selected from compounds acting at the $bc_1$ complex of the fungal mitochondrial respiratory electron transfer site; and optionally
(3) at least one of a surfactant, a solid diluent or a liquid diluent;

wherein component (1) and component (2) are present in a fungicidally effective amount and the mole ratio of component (1) to component (2) is from 30:1 to 1:30.

2. A fungicidal composition according to claim 1 wherein component (2) is a compound of formula II, including all geometric and stereoisomers, N-oxides and agriculturally suitable salts thereof,

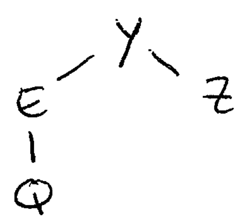

II

wherein

Q is

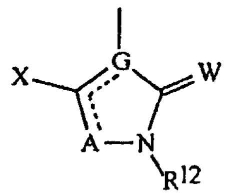 or 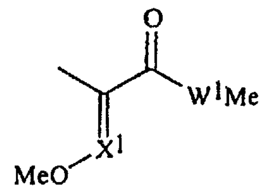 ;

Q-1 Q-2

E is selected from:

i) 1,2-phenylene optionally substituted with $R^{13}$ or both $R^{13}$ and $R^{14}$;
ii) a naphthalene ring, provided that when G and Y are attached to the same ring, then G and Y are attached to adjacent ring members, the naphthalene ring optionally substituted with $R^{13}$ or both $R^{13}$ and $R^{14}$; and
iii) a ring system selected from 5 to 12-membered monocyclic and fused bicyclic aromatic heterocyclic ring systems, each heterocyclic ring system containing 1 to 6 heteroatoms independently selected from the group nitrogen, oxygen, and sulfur, provided that each heterocyclic ring system contains no more than 4 nitrogens, no more than 2 oxygens, and no more than 2 sulfurs, each fused bicyclic ring system optionally containing one nonaromatic ring that optionally includes one or two $J^1$ as ring members and optionally includes one or two ring members independently

selected from C(=O) and $S(O)_2$, provided that G is attached to an aromatic ring, and when G and Y are attached to the same ring, then G and Y are attached to adjacent ring members, each aromatic heterocyclic ring system optionally substituted with $R^{13}$ or both $R^{13}$ and $R^{14}$;
A is O, S, N, $NR^{15}$ or $CR^{24}$;
G is C or N; provided that when G is C, then A is O, S or $NR^{15}$ and the floating double bond is attached to G; and when G is N, then A is N or $CR^{24}$ and the floating double bond is attached to A;
W is O, S, NH, N($C_1$-$C_6$ alkyl) or NO($C_1$-$C_6$ alkyl);
$W^1$ is O or NH;
X is H, $OR^{11}$, $S(O)_mR^{11}$, halogen, $C_1$-$C_6$ alkyl, $C_1$-$C_6$ haloalkyl, $C_3$-$C_6$ cycloalkyl, cyano, $NH_2$, $NHR^{11}$, N($C_1$-$C_6$ alkyl)$R^{11}$, NH($C_1$-$C_6$ alkoxy) or N($C_1$-$C_6$ alkoxy)$R^{11}$;
$X^1$ is CH or N;
$R^{11}$ is $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl. $C_2$-$C_6$ haloalkynyl, $C_3$-$C_6$ cycloalkyl, $C_2$-$C_4$ alkylcarbonyl or $C_2$-$C_4$ alkoxycarbonyl;
$R^{12}$ is H, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl, $C_2$-$C_4$ alkoxycarbonyl, hydroxy, $C_1$-$C_2$ alkoxy or acetyloxy;
$R^{13}$ and $R^{14}$ are each independently halogen; cyano; nitro; hydroxy; $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_1$-$C_6$ alkoxy; $C_1$-$C_6$ haloalkoxy; $C_2$-$C_6$ alkenyloxy; $C_2$-$C_6$ alkynyloxy; $C_1$-$C_6$ alkylthio; $C_1$-$C_6$ alkylsulfinyl; $C_1$-$C_6$ alkylsulfonyl; formyl; $C_2$-$C_6$ alkylcarbonyl; $C_2$-$C_6$ alkoxycarbonyl; $NH_2C(O)$; ($C_1$-$C_4$ alkyl)NHC(O); $(C_1$-$C_4$ alkyl$)_2$NC(O); $Si(R^{35})_3$; $Ge(R^{35})_3$; $(R^{35})_3Si$-C≡C-; or phenyl, phenylethynyl, benzoyl, or phenylsulfonyl each substituted with $R^{18}$ and optionally substituted with one or more $R^{20}$; or
when E is 1,2-phenylene and $R^{13}$ and $R^{14}$ are attached to adjacent atoms, $R^{13}$ and $R^{14}$ can be taken together as $C_3$-$C_5$ alkylene, $C_3$-$C_5$ haloalkylene, $C_3$-$C_5$ alkenylene or $C_3$-$C_5$ haloalkenylene each optionally substituted with 1-2 $C_1$-$C_3$ alkyl;
$R^{15}$ is H, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl or $C_2$-$C_4$ alkoxycarbonyl;
Y is -O-, $-S(O)_n-$, $-NR^{25}-$, -C(=O)-, $-CH(OR^{25})-$, $-CHR^{16}-$, $-CHR^{16}CHR^{16}-$, $-CR^{16}=CR^{16}-$, -C≡C-, $-CHR^{25}O-$, $-OCHR^{25}-$, $-CHR^{25}S(O)_n-$, $-S(O)_nCHR^{25}-$, $-CHR^{25}O-N=C(R^{17})-$, $-(R^{17})C=N-OCH(R^{25})-$, $-C(R^{17})=N-O-$, $-O-N=C(R^{17})-$, $-CHR^{25}OC(=O)N(R^{25})-$, $-CHR^{25}OC(=S)N(R^{25})-$, $-CHR^{25}OC(=O)O-$, $-CHR^{25}OC(=S)O-$, $-CHR^{25}OC(=O)S-$, $-CHR^{25}OC(=S)S-$, $-CHR^{25}SC(=O)N(R^{25})-$, $-CHR^{25}SC(=S)N(R^{25})-$, $-CHR^{25}SC(=O)O-$, $-CHR^{25}SC(=S)O-$, $-CHR^{25}SC(=O)S-$, $-CHR^{25}SC(=S)S-$, $-CHR^{25}SC(=NR^{25})S-$, $-CHR^{25}N(R^{25})C(=O)N(R^{25})-$, $-CHR^{25}O-N(R^{25})C(=O)N(R^{25})-$, $-CHR^{25}O-N(R^{25})C(=S)N(R^{25})-$, $-CHR^{25}O-N-C(R^{17})NR^{25}-$, $-CHR^{25}O-N=C$

$(R^{17})OCH_2$-, -$CHR^{25}O$-N=C($R^{17}$)-N=N-, -$CHR^{25}O$-N=C($R^{17}$)-C(=O)-, -$CHR^{25}O$-N=C($R^{17}$)-C(=N-$A^2$-$Z^1$)-$A^1$-, -$CHR^{25}O$-N=C($R^{17}$)-C($R^{17}$)=N-$A^2$-$A^3$-, -$CHR^{25}O$-N=C(-C($R^{17}$)=N-$A^2$-$Z^1$)-, -$CHR^{25}O$-N=C($R^{17}$)-$CH_2O$-, -$CHR^{25}O$-N=C($R^{17}$)-$CH_2S$-, -O-$CH_2CH_2O$-N=C($R^{17}$)-, -$CHR^{25}O$-C($R^{25}$)=C($R^{17}$)-, -$CHR^{25}O$-C($R^{17}$)=N-, -$CHR^{25}S$-C($R^{17}$)=N-, -C($R^{17}$)=N-$NR^{25}$-, -CH=N-N=C($R^{17}$)-, -$CHR^{25}N(R^{25})$-N=C($R^{17}$)-, -$CHR^{25}N(COCH_3)$-N=C($R^{17}$)-, -OC(=S)$NR^{25}$C(=O)-, -$CHR^{16}$-C(=$W^2$)-$A^1$-, -$CHR^{16}CHR^{16}$-C(=$W^2$)-$A^1$-, -$CR^{16}$=$CR^{16}$-C(=$W^2$)-$A^1$-, -C≡C-C(=$W^2$)-$A^1$-, -N=$CR^{16}$-C(=$W^2$)-$A^1$- or a direct bond; and the directionality of the Y linkage is defined such that the moiety depicted on the left side of the linkage is bonded to E and the moiety on the right side of the linkage is bonded to Z;

$Z^1$ is H or -$A^3$-Z;

$W^2$ is O or S;

$A^1$ is O, S, $NR^{25}$ or a direct bond;

$A^2$ is O, $NR^{25}$ or a direct bond;

$A^3$ is -C(=O)-, -$S(O)_2$- or a direct bond;

each $R^{16}$ is independently H, 1-2 $CH_3$, $C_2$-$C_3$ alkyl, $C_1$-$C_3$ alkoxy, $C_3$-$C_6$ cycloalkyl, formylamino, $C_2$-$C_4$ alkylcarbonylamino, $C_2$-$C_4$ alkoxycarbonylamino, $NH_2C(O)NH$, ($C_1$-$C_3$ alkyl)NHC(O)NH, ($C_1$-$C_3$ alkyl)$_2$NC(O)NH, N($C_1$-$C_3$ alkyl)$_2$, piperidinyl, morpholinyl, 1-2 halogen, cyano or nitro;

each $R^{17}$ is independently H, $C_1$-$C_6$ alkyl, $C_1$-$C_6$ haloalkyl, $C_1$-$C_6$ alkoxy, $C_1$-$C_6$ haloalkoxy, $C_1$-$C_6$ alkylthio, $C_1$-$C_6$ alkylsulfinyl, $C_1$-$C_6$ alkylsulfonyl, $C_1$-$C_6$ haloalkylthio, $C_1$-$C_6$ haloalkylsulfinyl, $C_1$-$C_6$ haloalkylsulfonyl, $C_2$-$C_6$ alkenyl, $C_2$-$C_6$ haloalkenyl, $C_2$-$C_6$ alkynyl, $C_2$-$C_6$ haloalkynyl, $C_3$-$C_6$ cycloalkyl, $C_2$-$C_4$ alkylcarbonyl, $C_2$-$C_4$ alkoxycarbonyl, halogen, cyano, nitro, hydroxy, amino, NH($C_1$-$C_6$ alkyl), N($C_1$-$C_6$ alkyl)$_2$ or morpholinyl;

each Z is independently selected from:

i) $C_1$-$C_{10}$ alkyl, $C_2$-$C_{10}$ alkenyl and $C_2$-$C_{10}$ alkynyl each substituted with $R^{19}$ and optionally substituted with one or more $R^{20}$;

ii) $C_3$-$C_8$ cycloalkyl, $C_3$-$C_8$ cycloalkenyl and phenyl each substituted with $R^{19}$ and optionally substituted with one or more $R^{20}$;

iii) a ring system selected from 3 to 14-membered monocyclic, fused bicyclic and fused tricyclic nonaromatic heterocyclic ring systems and 5 to 14-membered monocyclic, fused bicyclic and fused tricyclic aromatic heterocyclic ring systems, each heterocyclic ring system containing 1 to 6 heteroatoms independently selected from the group nitrogen, oxygen, and sulfur, provided that each heterocyclic ring system contains no more than 4 nitrogens, no more than 2 oxygens, and no more than 2 sulfurs, each nonaromatic or aromatic heterocyclic ring system substituted with $R^{19}$ and optionally substituted with one or more $R^{20}$;

iv) a multicyclic ring system selected from 8 to 14-membered fused-bicyclic and fused-tricyclic ring systems which are an aromatic carbocyclic ring system, a nonaromatic carbocyclic ring system, or a ring system containing one or two nonaromatic rings that each include one or two $J^1$ as ring members and one or two ring members independently selected from C(=O) and $S(O)_2$, and any remaining rings as aromatic carbocyclic rings, each multicyclic ring system substituted with $R^{19}$ and optionally substituted with one or more $R^{20}$; and

v) adamantyl substituted with $R^{19}$ and optionally substituted with one or more $R^{20}$;

each $J^1$ is independently selected from the group -$CHR^{23}$-, -$NR^{23}$-, -O- and -$S(O)_p$-;

$R^{18}$ is H, 1-2 halogen, $C_1$-$C_6$ alkyl, $C_1$-$C_6$ haloalkyl, $C_1$-$C_6$ alkoxy, $C_1$-$C_6$ haloalkoxy, $C_2$-$C_6$ alkenyl, $C_2$-$C_6$ haloalkenyl, $C_2$-$C_6$ alkynyl, $C_1$-$C_6$ alkylthio, $C_1$-$C_6$ haloalkylthio, $C_1$-$C_6$ alkylsulfinyl, $C_1$-$C_6$ alkylsulfonyl, $C_3$-$C_6$ cycloalkyl, $C_3$-$C_6$ alkenyloxy, $CO_2$($C_1$-$C_6$ alkyl), NH($C_1$-$C_6$ alkyl), N($C_1$-$C_6$ alkyl)$_2$, cyano, nitro, $SiR^{29}R^{30}R^{31}$ or $GeR^{29}R^{30}R^{31}$;

$R^{19}$ is H; 1-2 halogen; $C_1$-$C_6$ alkyl; $C_1$-$C_6$ haloalkyl; $C_1$-$C_6$ alkoxy; $C_1$-$C_6$ haloalkoxy; $C_2$-$C_6$ alkenyl; $C_2$-$C_6$ haloalkenyl; $C_2$-$C_6$ alkynyl; $C_1$-$C_6$ alkylthio; $C_1$-$C_6$ haloalkylthio; $C_1$-$C_6$ alkylsulfinyl; $C_1$-$C_6$ alkylsulfonyl; $C_3$-$C_6$ cycloalkyl; $C_3$-$C_6$ alkenyloxy; $CO_2$($C_1$-$C_6$ alkyl); NH($C_1$-$C_6$ alkyl); N($C_1$-$C_6$ alkyl)$_2$; -C($R^{28}$)=$NOR^{27}$; cyano; nitro; $SF_5$; $SiR^{32}R^{33}R^{34}$; or $GeR^{32}R^{33}R^{34}$; or $R^{19}$ is phenyl, benzyl, benzoyl, phenoxy, pyridinyl, pyridinyloxy, thienyl, thienyloxy, furanyl, pyrimidinyl or pyrimidinyloxy each optionally substituted with $R^{21}$ or both $R^{21}$ and $R^{22}$;

each $R^{20}$ is independently halogen, $C_1$-$C_4$ alkyl, $C_1$-$C_4$ haloalkyl, $C_1$-$C_4$ alkoxy, nitro or cyano; or

when $R^{19}$ and an $R^{20}$ are attached to adjacent atoms on Z, $R^{19}$ and said adjacently attached $R^{20}$ can be taken together as -$OCH_2O$- or -$OCH_2CH_2O$-; each $CH_2$ group of said taken together $R^{19}$ and $R^{20}$ optionally substituted with 1-2 halogen; or

when Y and an $R^{20}$ are attached to adjacent atoms on Z and Y is -$CHR^{25}O$-N=C($R^{17}$)-, -O-N=C($R^{17}$)-, -O-$CH_2CH_2O$-N=C($R^{17}$)-, -$CHR^{25}O$-C($R^{25}$)=C($R^{17}$)-, -CH=N-N=C($R^{17}$)-, -$CHR^{25}N(R^{25})$-N=C($R^{17}$)- or -$CHR^{25}N(COCH_3)$-N=C($R^{17}$)-, $R^{17}$ and said adjacently attached $R^{20}$ can be taken together as -$(CH_2)_r$-J- such

that J is attached to Z;

J is $-CH_2-$, $-CH_2CH_2-$, $-OCH_2-$, $-CH_2O-$, $-SCH_2-$, $-CH_2S-$, $-N(R^{26})CH_2-$ or $-CH_2N(R^{26})-$; each $CH_2$ group of said J optionally substituted with 1 to 2 $CH_3$;

$R^{21}$ and $R^{22}$ are each independently 1-2 halogen; $C_1$-$C_4$ alkyl; $C_1$-$C_4$ haloalkyl; $C_2$-$C_6$ alkenyl; $C_2$-$C_6$ haloalkenyl; $C_2$-$C_6$ alkynyl; $C_2$-$C_6$ haloalkynyl; $C_2$-$C_6$ alkoxyalkyl; $C_2$-$C_6$ alkylthioalkyl; $C_3$-$C_6$ alkoxyalkynyl; $C_7$-$C_{10}$ tetrahydropyranyloxyalkynyl; benzyloxymethyl; $C_1$-$C_4$ alkoxy; $C_1$-$C_4$ haloalkoxy; $C_3$-$C_6$ alkenyloxy; $C_3$-$C_6$ haloalkenyloxy; $C_3$-$C_6$ alkynyloxy; $C_3$-$C_6$ haloalkynyloxy; $C_2$-$C_6$ alkoxyalkoxy; $C_5$-$C_9$ trialkylsilylalkoxyalkoxy; $C_2$-$C_6$ alkylthioalkoxy; $C_1$-$C_4$ alkylthio; $C_1$-$C_4$ haloalkylthio; $C_1$-$C_4$ alkylsulfinyl; $C_1$-$C_4$ haloalkylsulfinyl; $C_1$-$C_4$ alkylsulfonyl; $C_1$-$C_4$ haloalkylsulfonyl; $C_3$-$C_6$ alkenylthio; $C_3$-$C_6$ haloalkenylthio; $C_2$-$C_6$ alkylthioalkylthio; nitro; cyano; thiocyanato; hydroxy; $N(R^{36})_2$; $SF_5$; $Si(R^{35})_3$; $Ge(R^{35})_3$; $(R^{35})_3Si-C\equiv C-$; $OSi(R^{35})_3$; $OGe(R^{35})_3$; $C(=O)R^{36}$; $C(=S)R^{36}$; $C(=O)OR^{36}$; $C(=S)OR^{36}$; $C(=O)SR^{36}$; $C(=S)SR^{36}$; $C(=O)N(R^{36})_2$; $C(=S)N(R^{36})_2$; $OC(=O)R^{36}$; $OC(=S)R^{36}$; $SC(=O)R^{36}$; $SC(=S)R^{36}$; $N(R^{36})C(=O)R^{36}$; $N(R^{36})C(=S)R^{36}$; $OC(=O)OR^{37}$; $OC(=O)SR^{37}$; $OC(=O)N(R^{36})_2$; $SC(=O)OR^{37}$; $SC(=O)SR^{37}$; $S(O)_2OR^{36}$; $S(O)_2N(R^{36})_2$; $OS(O)_2R^{37}$; $N(R^{36})S(O)_2R^{37}$; or phenyl, phenoxy, benzyl, benzyloxy, phenylsulfonyl, phenylethynyl or pyridinylethynyl, each optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

each $R^{23}$ is independently H; $C_1$-$C_6$ alkyl; $C_1$-$C_6$ haloalkyl; or phenyl optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

$R^{24}$ is H, halogen, $C_1$-$C_6$ alkyl, $C_1$-$C_6$ haloalkyl, $C_2$-$C_6$ alkenyl, $C_2$-$C_6$ haloalkenyl, $C_2$-$C_6$ alkynyl, $C_2$-$C_6$ haloalkynyl or $C_3$-$C_6$ cycloalkyl;

each $R^{25}$ is independently H; $C_1$-$C_3$ alkyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano; or when Y is $-CHR^{25}N(R^{25})C(=O)N(R^{25})-$, the two $R^{25}$ attached to nitrogen atoms on said group can be taken together as $-(CH_2)_s-$; or

when Y is $-CHR^{25}O-N=C(R^{17})NR^{25}-$, $R^{17}$ and the adjacently attached $R^{25}$ can be taken together as $-CH_2-(CH_2)_s-$, $-O-(CH_2)_s-$, $-S-(CH_2)_s-$ or $-N(C_1-C_3\ alkyl)-(CH_2)_S-$; with the directionality of said linkage defined such that the moiety depicted on the left side of the linkage is bonded to the carbon and the moiety on the right side of the linkage is bonded to the nitrogen;

$R^{26}$, $R^{27}$ and $R^{28}$ are each independently H; $C_1$-$C_3$ alkyl; $C_3$-$C_6$ cycloalkyl; or phenyl optionally substituted with halogen, $C_1$-$C_4$ alkyl, $C_1$-$C_4$ haloalkyl, $C_1$-$C_4$ alkoxy, $C_1$-$C_4$ haloalkoxy, nitro or cyano;

$R^{29}$, $R^{30}$, $R^{31}$, $R^{32}$, $R^{33}$ and $R^{34}$ are each independently $C_1$-$C_6$ alkyl, $C_2$-$C_6$ alkenyl, $C_1$-$C_4$ alkoxy or phenyl;

each $R^{35}$ is independently $C_1$-$C_4$ alkyl, $C_1$-$C_4$ haloalkyl, $C_2$-$C_4$ alkenyl, $C_1$-$C_4$ alkoxy or phenyl;

each $R^{36}$ is independently H; $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano;

each $R^{37}$ is independently $C_1$-$C_6$ alkyl; $C_1$-$C_6$ haloalkyl; $C_2$-$C_6$ alkenyl; $C_2$-$C_6$ haloalkenyl; $C_2$-$C_6$ alkynyl; $C_2$-$C_6$ haloalkynyl; $C_3$-$C_6$ cycloalkyl; or phenyl or benzyl, each optionally substituted on the phenyl ring with halogen, $C_1$-$C_4$ alkyl, $C_1$-$C_4$ haloalkyl, $C_1$-$C_4$ alkoxy, $C_1$-$C_4$ haloalkoxy, nitro or cyano;

m, n and p are each independently 0, 1 or 2;

r is 0 or 1; and

s is 2 or 3.

**3.** A fungicidal composition of claim 1 or claim 2 wherein component (1) has the formula

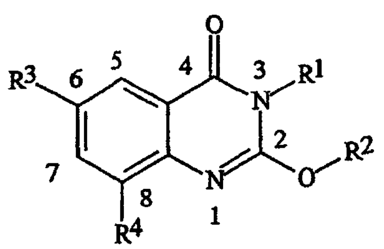

wherein $R^1$ and $R^2$ are both propyl, $R^3$ is iodine and $R^4$ is iodine or hydrogen, or $R^3$ is bromine and $R^4$ is hydrogen.

**4.** A fungicidal composition of any one of claims 1 to 3 wherein component (2) is at least one compound selected

from the group consisting of 2,4-dihydro-5-methoxy-2-methyl-4-[2-[[[[1-[3-(trifluoromethyl)phenyl]ethylidene]amino]-oxy]methyl]phenyl]-3*H*-1,2,4-triazol-3-one; kresoxim-methyl; azoxystrobin; and (*E*)-2-(methoxyimino)-*N*-methyl-2-(2-phenoxyphenyl)acetamide.

**5.** A fungicidal composition according to any one of claims 1 to 4, further comprising a compound that controls fungal disease by inhibiting the sterol biosynthesis pathway.

**6.** A fungicidal composition according to Claim 5, wherein the compound that control fungal disease by inhibiting the sterol biosynthesis pathway is a triazole.

**7.** A fungicidal composition of any of claims 1 through 6 wherein the weight ratio of component (1) to component (2) is from about 4:1 to 1:4.

**8.** A fungicidal composition of any of claims 1 through 7 wherein component (1) is 6-iodo-3-propyl-2-propyloxy-4(3*H*)-quinazolinone.

**9.** A fungicidal composition according to claim 1 comprising a fungicidally effective amount of (1) 6-iodo-3-propyl-2-propyloxy-4(3*H*)quinazolinone and (2) both 2,4-dihydro-5-methoxy-2-methyl-4-[2-[[[[1-[3-(trifluoromethyl)phenyl]ethylidene]amino]oxy]methyl]phenyl-3*H*-1,2,4-triazol-3-one, and flusilazole.

**10.** A method for controlling plant diseases caused by fungal plant pathogens comprising applying to the plant or portion thereof, or to the plant seed or seedling, a fungicidally effective amount of a composition of any one of claims 1 to 9.

**11.** The method of Claim 10 wherein the plant disease is wheat powdery mildew.

**12.** A method of curing wheat plants having a fungal plant disease caused by *Erysiphe graminis*, comprising:

applying to the wheat plant or a portion thereof

(1) a compound of the Formula I, including all geometric and stereoisomers, *N*-oxides, and agriculturally suitable salts thereof,

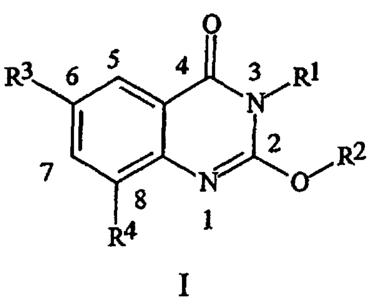

I

wherein $R^1$ and $R^2$ are both propyl, $R^3$ is iodine and $R^4$ is iodine or hydrogen or $R^3$ is bromine and $R^4$ is hydrogen; and
(2) at least one compound selected from compounds acting at the $bc_1$ complex of the fungal mitochondrial respiratory electron transfer site;

wherein component (1) and component (2) are added in synergistic fungicidally effective amounts and the ratio of component (1) to component (2) is about 30:1 to 1:30.

**13.** The method of claim 11 or claim 12 wherein the mole ratio of component (1) to component (2) is from about 4:1 to 1:10.

**14.** The method of any of claims 11 to 13 wherein component (1) is used at a rate of 0.2 g/ha or more.

**Patentansprüche**

**1.** Fungizide Zusammensetzung, aufweisend:

(1) mindestens ein Chinazolinon der Formel I, einschließend alle geometrischen und stereoisomeren N-Oxide und landwirtschaftlich geeignete Salze davon:

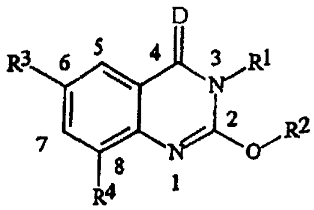

I

worin sind:

D O oder S;
$R^1$ $C_1$-$C_6$-Alkyl;
$R^2$ $C_1$-$C_6$-Alkyl;
$R^3$ Halogen; und
$R^4$ Wasserstoff oder Halogen;

(2) mindestens eine Verbindung ausgewählt aus den Verbindungen, die auf den *bc*$_1$-Komplex der pilzlich-mitochondrischen respiratorischen Elektronentransferstelle wirkt; und wahlweise

(3) mindestens ein Tensid, ein festes Streckmittel oder ein flüssiges Streckmittel;

worin Komponente (1) und Komponente (2) in einer fungizid wirksamen Menge vorliegen und das Molverhältnis von Komponente (1) zu Komponente (2) 30:1 bis 1:30 beträgt.

**2.** Fungizide Zusammensetzung nach Anspruch 1, bei welcher die Komponente (2) eine Verbindung der Formel II ist, einschließlich alle geometrischen und stereoisomeren N-Oxide und landwirtschaftlich geeignete Salze davon:

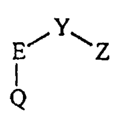

II

worin ist:

Q

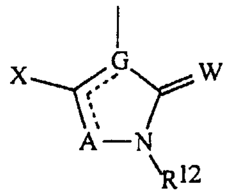

oder

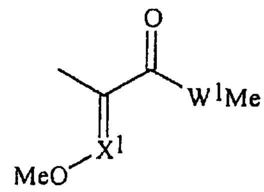

Q-1

Q-2

E ausgewählt aus:

i) 1,2-Phenylen, wahlweise substituiert mit $R^{13}$ oder sowohl mit $R^{13}$ als auch $R^{14}$;

ii) ein Naphthalin-Ring unter der Voraussetzung, dass, wenn sich G und Y an dem gleichen Ring befinden, dann G und Y an benachbarten Ringgliedern angebracht sind, wobei der Naphthalin-Ring wahlweise substituiert ist mit $R^{13}$ oder sowohl mit $R^{13}$ als auch $R^{14}$; und

iii) einem Ringsystem, ausgewählt aus 5- bis 12-gliedrigen, monocyclischen und kondensierten bicyclischen, aromatischen, heterocyclischen Ringsystemen, wobei jedes heterocyclische Ringsystem 1 bis 6 Heteroatome enthält, die unabhängig ausgewählt sind aus der Gruppe Stickstoff, Sauerstoff und Schwefel unter der Voraussetzung, dass jedes heterocyclische Ringsystem nicht mehr als 4 Stickstoffatome, nicht mehr als 2 Sauerstoffatome und nicht mehr als 2 Schwefelatome enthält, wobei jedes kondensierte bicyclische Ringsystem wahlweise einen nichtaromatischen Ring enthält, in den wahlweise 1 bis 2 $J^1$ als Ringglieder einbezogen sind und wahlweise 1 bis 2 Ringglieder einbezogen sind, die unabhängig ausgewählt sind aus C(=O) und $S(O)_2$ unter der Voraussetzung, dass G sich an dem aromatischen Ring befindet und, wenn sich G und Y an dem gleichen Ring befinden, dann G und Y an benachbarten Ringgliedern angebracht sind, wobei jedes aromatische, heterocyclische Ringsystem wahlweise substituiert ist mit $R^{13}$ oder sowohl mit $R^{13}$ als auch $R^{14}$;

A ist O, S, N, $NR^{15}$ oder $CR^{24}$;
G ist C oder N unter der Voraussetzung, dass, wenn G C ist, dann A O, S oder $NR^{15}$ ist und sich die bewegliche Doppelbindung an G befindet; und wobei, wenn G N ist, dann A N oder $CR^{24}$ ist und sich die bewegliche Doppelbindung an A befindet;
W ist O, S, NH, N($C_1$-$C_6$-Alkyl) oder NO($C_1$-$C_6$-Alkyl);
$W^1$ ist O oder NH;
X ist H, $OR^{11}$, $S(O)_mR^{11}$, Halogen, $C_1$-$C_6$-Alkyl, $C_1$-$C_6$-Halogenalkyl, $C_3$-$C_6$-Cycloalkyl, Cyano, $NH_2$, $NHR^{11}$, N($C_1$-$C_6$-Alkyl)$R^{11}$, NH($C_1$-$C_6$-Alkoxy) oder N($C_1$-$C_6$-Alkoxy)$R^{11}$;
$X^1$ ist CH oder N;
$R^{11}$ ist $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl, $C_3$-$C_6$-Cycloalkyl, $C_2$-$C_4$-Alkylcarbonyl oder $C_2$-$C_4$-Alkoxycarbonyl;
$R^{12}$ ist H, $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl, $C_3$-$C_6$-Cycloalkyl, $C_2$-$C_4$-Alkylcarbonyl oder $C_2$-$C_4$-Alkoxycarbonyl, Hydroxy, $C_1$-$C_2$-Alkoxy oder -Acetyloxy;
$R^{13}$ und $R^{14}$ jeweils unabhängig Halogen; Cyano; Nitro; Hydroxy; $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl, $C_1$-$C_6$-Alkoxy; $C_1$-$C_6$-Halogenalkoxy, $C_2$-$C_6$-Alkenyloxy; $C_2$-$C_6$-Alkinyloxy; $C_1$-$C_6$-Alkylthio; $C_1$-$C_6$-Alkylsulfinyl; $C_1$-$C_6$-Alkylsulfonyl; Formyl; $C_2$-$C_6$-Alkylcarbonyl; $C_2$-$C_6$-Alkoxycarbonyl; $NH_2C(O)$; ($C_1$-$C_4$-Alkyl)NHC(O); ($C_1$-$C_4$-Alkyl)$_2$NC(O); $Si(R^{35})_3$; Ge$(R^{35})_3$;
$(R^{35})_3Si$-C≡C-; oder Phenyl, Phenylethinyl, Benzoyl oder Phenylsulfonyl, jeweils substituiert mit $R^{18}$ und wahlweise substituiert mit einem oder mehreren $R^{20}$; oder
wenn E 1,2-Phenylen ist und $R^{13}$ und $R^{14}$ befinden sich an benachbarten Atomen, können $R^{13}$ und $R^{14}$ zusammengenommen $C_3$-$C_5$-Alkylen, $C_3$-$C_5$-Halogenalkylen, $C_3$-$C_5$-Alkenylen oder $C_3$-$C_5$-Halogenalkenylen sein, die jeweils substituiert sind mit 1 bis 2 $C_1$-$C_3$-Alkyl;
$R^{15}$ ist H, $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl, $C_3$-$C_6$-Cycloalkyl, $C_2$-$C_4$-Alkylcarbonyl oder $C_2$-$C_4$-Alkoxycarbonyl;

Y ist -O-, $-S(O)_n-$, $-NR^{25}-$, -C(=O)-, $-CH(OR^{25})-$, $-CHR^{16}-$, $-CHR^{16}CHR^{16}-$, $-CR^{16}=CR^{16}-$, -C≡C-, $-CHR^{25}O-$, $-OCHR^{25}-$, $-CHR^{25}S(O)_n-$, $-S(O)_nCHR^{25}$, $-CHR^{25}O-N=C(R^{17})-$, $-(R^{17})C=N-OCH(R^{25})-$, $-C(R^{17})=N-O-$, $-O-N=C(R^{17})-$, $-CHR^{25}OC(=O)N(R^{25})-$, $-CHR^{25}OC(=S)N(R^{25})-$, $-CHR^{25}OC(=O)O-$, $-CHR^{25}OC(=S)O-$, $-CHR^{25}OC(=O)S-$, $-CHR^{25}OC(=S)S-$, $-CHR^{25}SC(=O)N(R^{25})-$, $-CHR^{25}SC(=S)N(R^{25})-$, $-CHR^{25}SC(=O)O-$, $-CHR^{25}SC(=S)O-$, $-CHR^{25}SC(=O)S-$, $-CHR^{25}SC(=S)S-$, $-CHR^{25}SC(=NR^{25})S-$, $-CHR^{25}N(R^{25})C(=O)N(R^{25})-$, $-CHR^{25}O-N(R^{25})C(=O)N(R^{25})-$, $-CHR^{25}O-N(R^{25})C(=S)N(R^{25})-$, $-CHR^{25}O-N=C(R^{17})NR^{25}-$, $-CHR^{25}O-N=C(R^{17})OCH_2-$, $-CHR^{25}O-N=C(R^{17})-N=N-$, $-CHR^{25}O-N=C(R^{17})-C(=O)-$, $-CHR^{25}O-N=C(R^{17})-C(=N-A^2-Z^1)-A^1-$, $-CHR^{25}O-N=C(R^{17})-C(R^{17})=N-A^2-A^3-$, $-CHR^{25}O-N=C(-C(R^{17})=N-A^2-Z^1)-$, $-CHR^{25}O-N=C(R^{17})-CH_2O-$, $-CHR^{25}O-N=C(R^{17})-CH_2S-$, $-O-CH_2CH_2O-N=C(R^{17})-$, $-CHR^{25}O-C(R^{25})=C(R^{17})-$, $-CHR^{25}O-C(R^{17})=N-$, $-CHR^{25}S-C(R^{17})=N-$, $-C(R^{17})=N-NR^{25}-$, $-CH=N-N=C(R^{17})-$, $-CHR^{25}N(R^{25})-N=C(R^{17})-$, $-CHR^{25}N(COCH_3)-N=C(R^{17})-$, $-OC(=S)NR^{25}C(=O)-$, $-CHR^{16}-C(=W^2)-A^1-$, $-CHR^{16}CHR^{16}-C(=W^2)-A^1-$, $-CR^{16}=CR^{16}-C(=W^2)-A^1-$, $-C≡C-C(=W^2)-A^1-$, $-N=CR^{16}-C(=W^2)-A^1-$ oder eine direkte Bindung; wobei die Richtung der Y-Verknüpfung derart festgelegt ist, dass der auf der linken Seite der Verknüpfung dargestellte Teil an E gebunden ist und der Teil auf der rechten Seite der Verknüpfung an Z gebunden ist;

$Z^1$ ist H oder $-A^3-Z$;

$W^2$ ist O oder S;

$A^1$ ist O, S, $NR^{25}$ oder eine direkte Bindung;

$A^2$ ist O, $NR^{25}$ oder eine direkte Bindung;

$A^3$ ist -C(=O)-, $-S(O)_2-$ oder eine direkte Bindung;

jedes $R^{16}$ ist unabhängig H, 1 bis 2 $CH_3$, $C_2$-$C_3$-Alkyl, $C_1$-$C_3$-Alkoxy, $C_3$-$C_6$-Cycloalkyl, Formylamino, $C_2$-$C_4$-Alkylcarbonylamino, $C_2$-$C_4$-Alkoxycarbonylamino, $NH_2C(O)NH$, ($C_1$-$C_3$-Alkyl)NHC(O)NH, $(C_1$-$C_3$-Alkyl$)_2$NC(O)NH, N($C_1$-$C_3$-Alkyl$)_2$, Piperidinyl, Morpholinyl, 1 bis 2 Halogen, Cyano oder Nitro;

jedes $R^{17}$ ist unabhängig H, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylthio, $C_1$-$C_6$-Alkylsulfinyl, $C_1$-$C_6$-Alkylsulfonyl, $C_1$-$C_6$-Halogenalkylthio, $C_1$-$C_6$-Halogenalkylsulfinyl, $C_1$-$C_6$-Halogenalkylsulfonyl, $C_2$-$C_6$-Alkenyl, $C_2$-$C_6$-Halogenalkenyl, $C_2$-$C_6$-Alkinyl, $C_2$-$C_6$-Halogenalkinyl, $C_3$-$C_6$-Cycloalkyl, $C_2$-$C_4$-Alkylcarbonyl, $C_2$-$C_4$-Alkoxycarbonyl, Halogen, Cyano, Nitro, Hydroxy, Amino, NH($C_1$-$C_6$-Alkyl), N($C_1$-$C_6$-Alkyl$)_2$ oder Morpholinyl;

jedes Z ist unabhängig ausgewählt aus:

i) $C_1$-$C_{10}$-Alkyl, $C_2$-$C_{10}$-Alkenyl und $C_2$-$C_{10}$-Alkinyl, jeweils substituiert mit $R^{19}$ und wahlweise substituiert mit einem oder mehreren $R^{20}$;

ii) $C_3$-$C_8$-Cycloalkyl, $C_3$-$C_8$-Cycloalkenyl und Phenyl, jeweils substituiert mit $R^{19}$ und wahlweise substituiert mit einem oder mehreren $R^{20}$;

iii) Ein Ringsystem, ausgewählt aus 3- bis 14-gliedrigen monocyclischen, kondensierten bicyclischen und kondensierten tricyclischen, nichtaromatischen, heterocyclischen Ringsystemen und 5- bis 14-gliedrigen monocyclischen, kondensierten bicyclischen und kondensierten tricyclischen, aromatischen, heterocyclischen Ringsystemen, wobei jedes heterocyclische Ringsystem 1 bis 6 Heteroatome enthält, unabhängig ausgewählt aus der Gruppe Stickstoff, Sauerstoff und Schwefel unter der Voraussetzung, dass jedes heterocyclische Ringsystem nicht mehr als 4 Stickstoffatome enthält, nicht mehr als 2 Sauerstoffatome enthält und nicht mehr als 2 Schwefelatome enthält, wobei jedes nichtaromatische oder aromatische heterocyclische Ringsystem substituiert mit $R^{19}$ und wahlweise substituiert ist mit einem oder mehreren $R^{20}$;

iv) einem multicyclischen Ringsystem, ausgewählt aus 8- bis 14-gliedrigen, kondensiert-bicyclischen und kondensiert-tricyclischen Ringsystemen, die ein aromatisches carbocyclisches Ringsystem sind, ein nichtaromatisches carbocyclisches Ringsystem oder ein Ringsystem, das eins oder zwei nichtaromatische Ringe enthält, in die jeweils ein oder zwei $J^1$ als Ringglieder einbezogen sind sowie ein oder zwei Ringglieder, die unabhängig ausgewählt sind aus C(=O) und $S(O)_2$ und allen übrigen Ringen als aromatische carbocyclische Ringe, wobei jedes multicyclische Ringsystem substituiert ist mit $R^{19}$ und wahlweise substituiert ist mit einem oder mehreren $R^{20}$; und

v) Adamantyl, substituiert mit $R^{19}$ und wahlweise substituiert mit einem oder mehreren $R^{20}$;

wobei jedes $J^1$ unabhängig ausgewählt ist aus der Gruppe: $-CHR^{23}-$, $-NR^{23}$, -Ound $-S(O)_p-$;

$R^{18}$ ist H, 1-2-Halogenatome, $C_1$-$C_6$-Alkyl, $C_1$-$C_6$-Halogenalkyl, $C_1$-$C_6$-Alkoxy, $C_1$-$C_6$-Halogenalkoxy, $C_2$-$C_6$-Alkenyl, $C_2$-$C_6$-Halogenalkenyl, $C_2$-$C_6$-Alkinyl, $C_1$-$C_6$-Alkylthio, $C_1$-$C_6$-Halogenalkylthio, $C_1$-$C_6$-Alkylsulfinyl, $C_1$-$C_6$-Alkylsulfonyl, $C_3$-$C_6$-Cycloalkyl, $C_3$-$C_6$-Alkenyloxy, $CO_2$($C_1$-$C_6$-Alkyl), NH($C_1$-$C_6$-Alkyl), N($C_1$-$C_6$-Al-

kyl)$_2$; Cyano, Nitro, $SiR^{29}R^{30}R^{31}$ oder $GeR^{29}R^{30}R^{31}$;

$R^{19}$ ist H; 1 bis 2 Halogenatome; $C_1$-$C_6$-Alkyl; $C_1$-$C_6$-Halogenalkyl; $C_1$-$C_6$-Alkoxy; $C_1$-$C_6$-Halogenalkoxy; $C_2$-$C_6$-Alkenyl; $C_2$-$C_6$-Halogenalkenyl; $C_2$-$C_6$-Alkinyl; $C_1$-$C_6$-Alkylthio; $C_1$-$C_6$-Halogenalkylthio; $C_1$-$C_6$-Alkylsulfinyl; $C_1$-$C_6$-Alkylsulfonyl; $C_3$-$C_6$-Cycloalkyl; $C_3$-$C_6$-Alkenyloxy; $CO_2$($C_1$-$C_6$-Alkyl); NH($C_1$-$C_6$-Alkyl); N($C_1$-$C_6$-Alkyl)$_2$; -C($R^{28}$)=NO$R^{27}$; Cyano; Nitro; $SF_5$; $SiR^{32}R^{33}R^{34}$ oder $GeR^{32}R^{33}R^{34}$; oder $R^{19}$ ist Phenyl, Benzyl, Benzoyl, Phenoxy, Pyridinyl, Pyridinyloxy, Thienyl, Thienyloxy, Furanyl, Pyrimidinyl oder Pyrimidinyloxy, jeweils wahlweise substituiert mit $R^{21}$ oder sowohl mit $R^{21}$ als auch $R^{22}$;

jedes $R^{20}$ ist unabhängig ein Halogenatom, $C_1$-$C_4$-Alkyl, $C_1$-$C_4$-Halogenalkyl, $C_1$-$C_4$-Alkoxy, Nitro oder Cyano; oder

wenn $R^{19}$ und ein $R^{20}$ sich an benachbarten Atomen an Z befinden, können $R^{19}$ und das benachbart angebrachte $R^{20}$ zusammengenommen $-OCH_2O-$ sein oder $-OCH_2CH_2O-$; wobei jede $CH_2$-Gruppe der zusammengenommenen $R^{19}$ und $R^{20}$ wahlweise substituiert sind mit 1 bis 2 Halogenatomen; oder

wenn Y und ein $R^{20}$ sich an benachbarten Atomen an Z befinden und Y ist

-CH$R^{25}$O-N=C($R^{17}$)-, -O-N=C($R^{17}$)-, -O-$CH_2CH_2$O-N=C($R^{17}$)-, -CH$R^{25}$O-C($R^{25}$)=C($R^{17}$)-, -CH=N-N=C($R^{17}$)-, -CH$R^{25}$N($R^{25}$)-N=C($R^{17}$)- oder -CH$R^{25}$N($COCH_3$)-N=C($R^{17}$)-, können $R^{17}$ und das benachbart angebrachte $R^{20}$ zusammengenommen sein als $-(CH_2)_r$-J- derart, dass J an Z angebracht ist;

J ist $-CH_2-$, $-CH_2CH_2-$, $-OCH_2-$, $-CH_2O-$, $-SCH_2-$, $-CH_2S-$, -N($R^{26}$)$CH_2$- oder -$CH_2$N($R^{26}$)-; jede $CH_2$-Gruppe des J wahlweise substituiert mit 1 bis 2 $CH_3$;

$R^{21}$ und $R^{22}$ sind jeweils unabhängig 1-2-Halogenatome; $C_1$-$C_4$-Alkyl; $C_1$-$C_4$-Halogenalkyl; $C_2$-$C_6$-Alkenyl; $C_2$-$C_6$-Halogenalkenyl; $C_2$-$C_6$-Alkinyl; $C_2$-$C_6$-Halogenalkinyl; $C_2$-$C_6$-Alkoxyalkyl; $C_2$-$C_6$-Alkylthioalkyl; $C_3$-$C_6$-Alkoxyalkinyl; $C_7$-$C_{10}$-Tetrahydropyranyloxyalkinyl; Benzyloxymethyl; $C_1$-$C_4$-Alkoxy; $C_1$-$C_4$-Halogenalkoxy; $C_3$-$C_6$-Alkenyloxy; $C_3$-$C_6$-Halogenalkenyloxy; $C_3$-$C_6$-Alkinyloxy; $C_3$-$C_6$-Halogenalkinyloxy; $C_2$-$C_6$-Alkoxyalkoxy; $C_5$-$C_9$-Trialkylsilylalkoxyalkoxy; $C_2$-$C_6$-Alkylthioalkoxy; $C_1$-$C_4$-Alkylthio; $C_1$-$C_4$-Halogenalkylthio; $C_1$-$C_4$-Alkylsulfinyl; $C_1$-$C_4$-Halogenalkylsulfinyl; $C_1$-$C_4$-Alkylsulfonyl; $C_1$-$C_4$-Halogenalkylsulfonyl; $C_3$-$C_6$-Alkenylthio; $C_3$-$C_6$-Halogenalkenylthio; $C_2$-$C_6$-Alkylthioalkylthio; Nitro; Cyano; Thiocyanato; Hydroxy; N($R^{36}$)$_2$; $SF_5$; Si($R^{35}$)$_3$; Ge($R^{35}$)$_3$; ($R^{35}$)$_3$Si-C≡C-; OSi($R^{35}$)$_3$; OGe($R^{35}$)$_3$; C(=O)$R^{36}$; C(=S)$R^{36}$; C(=O)O$R^{36}$; C(=S)O$R^{36}$; C(=O)S$R^{36}$; C(=S)S$R^{36}$; C(=O)N($R^{36}$)$_2$; C(=S)N($R^{36}$)$_2$; OC(=O)$R^{36}$; OC(=S)$R^{36}$; SC(=O)$R^{36}$; SC(=S)$R^{36}$; N($R^{36}$)C(=O)$R^{36}$; N($R^{36}$)C(=S)$R^{36}$; OC(=O)O$R^{37}$; OC(=O)S$R^{37}$; OC(=O)N($R^{36}$)$_2$; SC(=O)O$R^{37}$; SC(=O)S$R^{37}$; S(O)$_2$O$R^{36}$; S(O)$_2$N($R^{36}$)$_2$; OS(O)$_2$$R^{37}$; N($R^{36}$)S(O)$_2$$R^{37}$ oder Phenyl, Phenoxy, Benzyl, Benzyloxy, Phenylsulfonyl, Phenylethinyl oder Pydridinylethinyl, jeweils substituiert mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano;

jedes $R^{23}$ unabhängig H; $C_1$-$C_6$-Alkyl; $C_1$-$C_6$-Halogenalkyl oder Phenyl, wahlweise substituiert mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano;

$R^{24}$ ist H, Halogen, $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl oder $C_3$-$C_6$-Cycloalkyl;

jedes $R^{25}$ ist unabhängig H; $C_1$-$C_3$-Alkyl; $C_3$-$C_6$-Cycloalkyl oder Phenyl oder Benzyl, jeweils wahlweise substituiert an dem Phenyl-Ring mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano; oder

wenn Y -CH$R^{25}$N($R^{25}$)C(=O)N($R^{25}$)- ist, können die zwei an den Stickstoffatomen an der Gruppe befindlichen $R^{25}$ zusammengenommen werden als $-(CH_2)S-$; oder

wenn Y -CH$R^{25}$O-N=C($R^{17}$)N$R^{25}$- ist, können $R^{17}$ und die benachbart angebrachten $R^{25}$ zusammengenommen sein als $-CH_2-(CH_2)s-$, $-O-(CH_2)s-$, $-S-(CH_2)s$oder -N($C_1$-$C_3$-Alkyl)-$(CH_2)s$-, wobei die Richtung dieser Verknüpfung derart festgelegt ist, dass der auf der linken Seite der Verknüpfung dargestellte Teil an dem Kohlenstoff gebunden ist und der Teil auf der rechten Seite von der Verknüpfung an dem Stickstoff gebunden ist;

$R^{26}$, $R^{27}$ und $R^{28}$ sind jeweils unabhängig H; $C_1$-$C_3$-Alkyl; $C_3$-$C_6$-Cycloalkyl; oder Phenyl, wahlweise substituiert mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano;

$R^{29}$, $R^{30}$, $R^{31}$, $R^{32}$, $R^{33}$ und $R^{34}$ sind jeweils unabhängig $C_1$-$C_6$-Alkyl, $C_2$-$C_6$-Alkenyl, $C_1$-$C_4$-Alkoxy oder Phenyl;

jedes $R^{35}$ unabhängig $C_1$-$C_4$-Alkyl, $C_1$-$C_4$-Halogenalkyl, $C_2$-$C_4$-Alkenyl, $C_1$-$C_4$-Alkoxy oder Phenyl;

jedes $R^{36}$ unabhängig H; $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl; $C_3$-$C_6$-Cycloalkyl; oder Phenyl oder Benzyl, jeweils wahlweise am Phenyl-Ring substituiert mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano;

jedes $R^{37}$ ist unabhängig $C_1$-$C_6$-Alkyl, $C_1$-$C_6$-Halogenalkyl, $C_2$-$C_6$-Alkenyl, $C_2$-$C_6$-Halogenalkenyl, $C_2$-$C_6$-Alkinyl, $C_2$-$C_6$-Halogenalkinyl; $C_3$-$C_6$-Cycloalkyl; oder Phenyl oder Benzyl, jeweils wahlweise am Phenyl-Ring substituiert mit Halogen, $C_1$-$C_4$-Alkyl, $C_1$-$C_4$-Halogenalkyl, $C_1$-$C_4$-Alkoxy, $C_1$-$C_4$-Halogenalkoxy, Nitro oder Cyano;

m, n und p sind jeweils unabhängig Null, 1 oder 2;
r ist Null oder 1; und
s ist 2 oder 3.

**3.** Fungizide Zusammensetzung nach Anspruch 1 oder 2, worin die Komponente (1) die Formel hat:

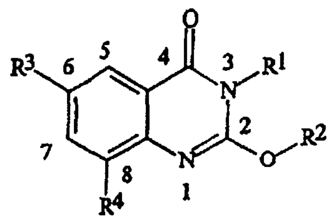

I

worin $R^1$ und $R^2$ beide Propyl sind, $R^3$ ist Iod und $R^4$ ist Iod oder Wasserstoff oder $R^3$ ist Brom und $R^4$ ist Wasserstoff.

**4.** Fungizide Zusammensetzung nach einem der Ansprüche 1 bis 3, worin die Komponente (2) mindestens eine Verbindung ist, ausgewählt aus der Gruppe, bestehend aus 2,4-Dihydro-5-methoxy-2-methyl-4-[2-[[[[1-[3-(trifluormethyl)phenyl]ethyliden]-amino]oxy]methyl]phenyl]-3*H*-1,2,4-triazol-3-on; Kresoximmethyl; Azoxystrobin; und (*E*)-2-(Methoxyimino)-*N*-methyl-2-(2-phenoxyphenyl)acetamid.

**5.** Fungizide Zusammensetzung nach einem der Ansprüche 1 bis 4, ferner aufweisend eine Verbindung, die die pilzliche Erkrankung durch Hemmung des Sterin-Biosyntheseweges bekämpft.

**6.** Fungizide Zusammensetzung nach Anspruch 5, wobei die Verbindung, die die pilzliche Erkrankung durch Hemmung des Sterin-Biosyntheseweges bekämpft, ein Triazol ist.

**7.** Fungizide Zusammensetzung nach einem der Ansprüche 1 bis 6, wobei das Gewichtsverhältnis von Komponente (1) und Komponente (2) etwa 4:1 bis 1:4 beträgt.

**8.** Fungizide Zusammensetzung nach einem der Ansprüche 1 bis 7, wobei die Komponente (1) 6-Iod-3-propyl-2-propyloxy-4(3*H*)-chinazolinon ist.

**9.** Fungizide Zusammensetzung nach Anspruch 1, aufweisend ein fungizid wirksame Menge von (1) 6-Iod-3-propyl-2-propyloxy-4(3*H*)-chinazolinon und (2) sowohl 2,4-Dihydro-5-methoxy-2-methyl-4-[2-[[[[ 1-[3-(trifluormethyl)phenyl]ethyliden]amino]oxy]-methyl]phenyl]-3*H*-1,2,4-triazol-3-on als auch Flusilazol.

**10.** Verfahren zum Bekämpfen von Pflanzenkrankheiten, die durch pilzliche Pflanzenpathogene hervorgerufen werden, umfassend das Aufbringen auf die Pflanze oder Teilen davon oder auf den Pflanzensamen oder -keimling einer fungizid wirksamen Menge einer Zusammensetzung nach einem der Ansprüche 1 bis 9.

**11.** Verfahren nach Anspruch 10, bei welchem die Pflanzenkrankheit Weizenmehltau ist.

**12.** Verfahren zum Heilen von Weizenpflanzen, die eine pilzliche Pflanzenkrankheit haben, hervorgerufen durch *Esyphe graminis*, umfassend:

Aufbringen auf eine Weizenpflanze oder einen Teil davon:

(1) eine Verbindung der Formel I, einschließlich alle geometrischen und stereoisomeren N-Oxide sowie landwirtschaftlich geeignete Salze davon:

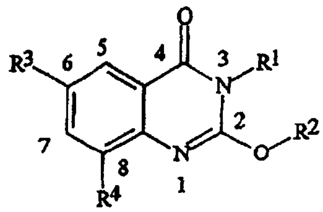

I

worin $R^1$ und $R^2$ beide Propyl sind, $R^3$ ist Iod, $R^4$ ist Iod oder Wasserstoff oder $R^3$ ist Brom und $R^4$ ist Wasserstoff; sowie

(2) eine Verbindung, ausgewählt aus den Verbindungen, die auf den $bc_1$-Komplex der pilzlich-mitochondrischen respiratorischen Elektronentransferstelle wirken;

wobei die Komponente (1) und die Komponente (2) in synergistisch fungizid wirksamen Mengen zugesetzt werden und das Verhältnis von Komponente (1) zu Komponente (2) etwa 30:1 bis 1:30 beträgt.

**13.** Verfahren nach Anspruch 11 oder 12 bei welchem das Molverhältnis von Komponente (1) zu Komponente (2) etwa 4:1 bis 1:10 beträgt.

**14.** Verfahren nach Anspruch 11 bis 13 bei welchem Komponente (1) mit einer Aufwandmenge 0,2 g/ha verwendet wird.

## Revendications

**1.** Une composition fongicide comprenant :

(1) au moins une quinazolinone de Formule I, y compris tous les isomères géométriques et stéréoisomères, *N*-oxydes et sels convenant en agriculture de ceux-ci,

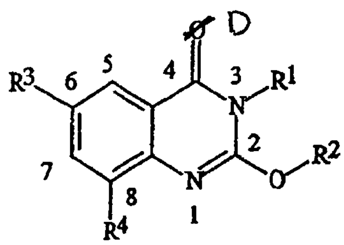

où

D est O ou S ;
$R^1$ est un alkyle en $C_1$-$C_6$ ;
$R^2$ est un alkyle en $C_1$-$C_6$ ;
$R^3$ est un halogène ; et
$R^4$ est un hydrogène ou un halogène ;

(2) au moins un composé choisi parmi les composés agissant sur le complexe $bc_1$ du site de transfert d'électrons respiratoires mitochondrials fongiques ; et le cas échéant
(3) au moins un parmi les agents tensioactifs, diluant solide ou diluant liquide ;

dans laquelle le composant (1) et le composant (2) sont présents en une quantité fongicidement efficace et le rapport molaire du composant (1) au composant (2) est de 30:1 à 1:30.

**2.** Une composition fongicide selon la revendication 1, dans laquelle le composant (2) est un composant de Formule

II, y compris tous les isomères géométriques et stéréoisomères, N-oxydes et sels convenant en agriculture de ceux-ci,

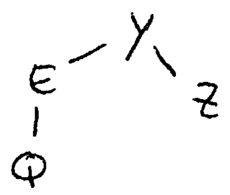

II

dans laquelle

Q est

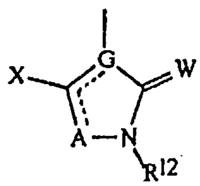

Q-1

ou

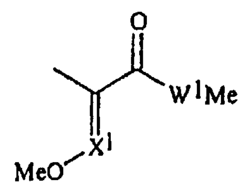

Q-2

E est choisi parmi :

i) 1,2-phénylène éventuellement substitué par $R^{13}$ ou à la fois par $R^{13}$ et $R^{14}$ ;
ii) un noyau naphtalène, à condition que si G et Y sont fixés au même noyau, G et Y sont fixés à des éléments de noyau adjacents, le noyau naphtalène étant éventuellement substitué par $R^{13}$ ou à la fois par $R^{13}$ et $R^{14}$ ; et
iii) un système cyclique choisi parmi les systèmes cycliques à 5 à 12 éléments monocycliques et bicycliques condensés hétérocycliques aromatiques, chaque système cyclique hétérocyclique comportant de 1 à 6 hétéroatomes choisis indépendamment parmi le groupe constituant par l'azote, l'oxygène et le soufre, pour autant que chaque système cyclique hétérocyclique ne contienne pas plus de 4 atomes d'azote, pas plus de 2 oxygènes et pas plus de 2 soufres, chaque système cyclique bicyclique condensé comportant éventuellement un cycle non aromatique qui comprend optionnellement un ou deux $J^1$ comme éléments de cycle et renfermant éventuellement un ou deux éléments de cycle choisis indépendamment parmi C (=O) et $S(O)_2$, pour autant que G soit fixé à un noyau aromatique, et si G et Y sont fixés au même noyau, G et Y sont fixés à des éléments de noyau adjacents, chaque système cyclique hétérocyclique étant éventuellement substitué par $R^{13}$ ou à la fois par $R^{13}$ et $R^{14}$ ;

A est O, S, N, $NR^{15}$ ou $CR^{24}$ ; G est C ou N ; à condition que si G est C, A est O, S ou $NR^{15}$ et la double liaisonflottante est fixée à G ; et si G est N, alors A est N ou $CR^{24}$ et la double liaison flottante est fixée à A ;
W est O, S, NH, C(alkyle en $C_1$-$C_6$) ou NO(alkyle en $C_1$-$C_6$) ;
$W^1$ est O ou NH;
X est H, $OR^{11}$, $S(O)_mR^{11}$, halogène, alkyle en $C_1$-$C_6$, haloalkyle en $C_1$-$C_6$, cycloalkyle en $C_1$-$C_6$, cyano, $NH_2$, $NHR^{11}$, N(alkyle en $C_1$-$C_6$)$R^{11}$,
NH(alcoxy en $C_1$-$C_6$) ou N(alcoxy en $C_1$-$C_6$)$R^{11}$ ;
$X^1$ est CH ou N ;
$R^{11}$ est un alkyle en $C_1$-$C_6$, haloalkyle en $C_1$-$C_6$, alkényle en $C_2$-$C_6$, haloalkényle en $C_2$-$C_6$, alkynyle en $C_2$-$C_6$,

haloalkynyle en $C_2$-$C_6$, cycloalkyle en $C_3$-$C_6$, alkylcarbonyle en $C_2$-$C_4$ ou alcoxycarbonyle en $C_2$-$C_4$ ;

$R^{12}$ est H, alkyle en $C_1$-$C_6$, haloalkyle en $C_1$-$C_6$, alkényle en $C_2$-$C_6$, haloalkényle en $C_2$-$C_6$, alkynyle en $C_2$-$C_6$, haloalkynyle en $C_2$-$C_6$, cycloalkyle en $C_3$-$C_6$, alkylcarbonyle en $C_2$-$C_4$, alcoxycarbonyle en $C_2$-$C_4$, hydroxy, alcoxy en $C_1$-$C_2$ ou acétyloxy ;

$R^{13}$ et $R^{14}$ sont chacun indépendamment halogène ; cyano ; nitro ; hydroxy ; alkyle en $C_1$-$C_6$ ; haloalkyle en $C_1$-$C_6$ ; alkényle en $C_2$-$C_6$ ; haloalkényle en $C_2$-$C_6$ ; alkynyle en $C_2$-$C_6$ ; haloalkynyle en $C_2$-$C_6$ ; alcoxy en $C_1$-$C_6$ ; haloalcoxy en $C_1$-$C_6$ ; alkényloxy en $C_2$-$C_6$ ; alkynyloxy en $C_2$-$C_6$ ; alkylthio en $C_1$-$C_6$ ; alkylsulfinyle en $C_1$-$C_6$ ; alkylsulfonyle en $C_1$-$C_6$ ; formyle ; alkylcarbonyle en $C_2$-$C_6$ ; alcoxycarbonyle en $C_2$-$C_6$ ; $NH_2C(O)$ ; (alkyle en $C_1$-$C_4$)NHC(O) ; (alkyle en $C_1$-$C_4$)$_2$NC(O) ; $Si(R^{35})_3$ ; $Ge(R^{35})_3$ ; $(R^{35})_3Si$-C≡C- ; ou phényle, phényléthynyle, benzoyle ou phénylsulfonyle, chacun substitué par $R^{18}$ et le cas échéant substitué par un ou plusieurs $R^{20}$ ; ou bien si E est un 1,2-phénylène et $R^{13}$ et $R^{14}$ sont fixés à des atomes adjacents,

$R^{13}$ et $R^{14}$ peuvent être pris ensemble pour former un alkylène en $C_3$-$C_5$, haloalkylène en $C_3$-$C_5$, alhénylène en $C_3$-$C_5$ ou haloalkénylène en $C_3$-$C_5$, chacun éventuellement substitué par 1 à 2 alkyle en $C_1$-$C_3$ ;

$R^{15}$ est H, alkyle en $C_1$-$C_6$, haloalkyle en $C_1$-$C_6$, alkényle en $C_2$-$C_6$, haloalkényle en $C_2$-$C_6$, alkynyle en $C_2$-$C_6$, haloalkynyle en $C_2$-$C_6$, cycloalkyle en $C_3$-$C_6$, alkylcarbonyle en $C_2$-$C_4$ ou alcoxycarbonyle en $C_2$-$C_4$ ;

Y est -O-, $-S(O)_n-$, $-NR^{25}-$, -C(=O)-, $-CH(OR)^{25}-$, $-CHR^{16}-$, $-CHR^{16}CHR^{16}-$, $-CR^{16}=CR^{16}$, -C≡C-, $-CHR^{25}O-$, $-OCHR^{25}-$, $-CHR^{25}S(O)_n-$, $-S(O)_nCHR^{25}-$, $-CHR^{25}O-N=C(R^{17})-$, $-(R^{17})C=N-OCH(R^{25})-$, $-C(R^{17})=N-O-$, $-O-N=C(R^{17})-$, $-CHR^{25}OC(=O)N(R^{25})-$, $-CHR^{25}OC(=S)N(R^{25})-$, $-CHR^{25}OC(=O)O-$, $CHR^{25}OC(=S)O-$, $-CHR^{25}OC(=O)S-$, $-CHR^{25}OC(=S)S-$, $-CHR^{25}SC(=O)N(R^{25})-$, $-CHR^{25}SC(=S)N(R^{25})-$, $-CHR^{25}SC(=O)O-$, $-CHR^{25}SC(=S)O-$, $-CHR^{25}SC(=O)S-$, $-CHR^{25}SC(=S)S-$, $-CHR^{25}SC(=NR^{25})S-$, $-CHR^{25}N(R^{25})C(=O)N(R^{25})-$, $-CHR^{25}O-N(R^{25})C(=O)N(R^{25})-$, $-CHR^{25}O-N(R^{25})C(=S)N(R^{25})-$, $-CHR^{25}O-N=C(R^{17})NR^{25}-$, $-CHR^{25}O-N=C(R^{17})OCH_2-$, $-CHR^{25}O-N=C(R^{17})-N=N-$, $-CHR^{25}O-N=C(R^{17})-C(=O)-$, $-CHR^{25}O-N=C(R^{17})-C(=N-A^2-Z^1)-A^1-$, $-CHR^{25}O-N=C(R^{17})-C(R^{17})=N-A^2-A^3-$, $-CHR^{25}O-N=C(-C(R^{17})=N-A^2-Z^1)-$, $-CHR^{25}O-N=C(R^{17})-CH_2O-$, $-CHR^{25}O-N=C(R^{17})-CH_2S-$, $-O-CH_2CH_2O-N=C(R^{17})-$, $-CHR^{25}O-C(R^{25})=C(R^{17})-$, $-CHR^{25}O-C(R^{17})=N-$, $-CHR^{25}S-C(R^{17})=N-$, $-C(R^{17})=N-NR^{25}-$, $-CH=N-N=C(R^{17})-$, $-CHR^{25}N(R^{25})-N=C(R^{17})-$, $-CHR^{25}N(COCH_3)-N=C(R^{17})-$, $-OC(=S)NR^{25}C(=O)-$, $-CHR^{16}-C(=W^2)-A^1-$, $-CHR^{16}CHR^{16}-C(=W^2)-A^1-$, $-CR^{16}=CR^{16}-C(=W^2)-A^1-$, $-C≡C-C(=W^2)-A^1-$, $-N=CR^{16}-C(=W^2)-A^1-$ ou une liaison directe; et l'orientation de la liaison Y est définie de façon telle que le reste décrit du côté gauche de la liaison est fixé à E et le reste du côté droit de la liaison est fixé à Z ;

$Z^1$ est H ou $-A^3-Z$ ;

$W^2$ est O ou S ;

$A^1$ est O, S, $NR^{25}$ ou une liaison directe ;

$A^2$ est O, $NR^{25}$ ou une liaison directe ;

$A^3$ est -C(=O)-, $-S(O)_2-$ ou une liaison directe ; chaque $R^{16}$ est indépendamment H, 1 à 2 $CH_3$, alkyle en $C_2$-$C_3$, alcoxy en $C_1$-$C_3$, cycloalkyle en $C_3$-$C_6$, formylamino, alkylcarbonylamino en $C_2$-$C_4$, alcoxycarbonylamino en $C_2$-$C_4$, $NH_2C(O)NH$, (alkyle en $C_1$-$C_3$)NHC(O)NH, (alkyle en $C_1$-$C_3$)$_2$NC(O)NH, N(alkyle en $C_1$-$C_3$)$_2$, pipéridinyle, morpholinyle, 1 à 2 halogène, cyano ou nitro ; chaque $R^{17}$ est indépendamment H, alkyle en $C_1$-$C_6$, haloalkyle en $C_1$-$C_6$, alcoxy en $C_1$-$C_6$, haloalcoxy en $C_1$-$C_6$, alkylthio en $C_1$-$C_6$, alkylsulfinyle en $C_1$-$C_6$, alkylsulfonyle en $C_1$-$C_6$, haloalkylthio en $C_1$-$C_6$, haloalkylsulfinyle en $C_1$-$C_6$, haloalkylsulfonyle en $C_1$-$C_6$, alkényle en $C_2$-$C_6$, haloalkényle en $C_2$-$C_6$, alkynyle en $C_2$-$C_6$, haloalkynyle en $C_2$-$C_6$, cycloalkyle en $C_3$-$C_6$, alkylcarbonyle en $C_2$-$C_4$, alcoxycarbonyle en $C_2$-$C_4$, halogène, cyano, nitro, hydroxy, amino, NH(alkyle en $C_1$-$C_6$), N (alkyle en $C_1$-$C_6$)$_2$ ou morpholinyle ; chaque Z est indépendamment choisi parmi : alkyle en $C_1$-$C_{10}$, alkényle en $C_2$-$C_{10}$ et alkynyle en $C_2$-$C_{10}$, chacun pouvant être substitué par $R^{19}$ et le cas échéant substitué par un ou plusieurs $R^{20}$ ;

cycloalkyle en $C_3$-$C_8$, cycloalkényle en $C_3$-$C_8$ et phényle, chacun substitué par $R^{19}$ et le cas échéant substitué par un ou plusieurs $R^{20}$ ;

un système cyclique choisi parmi les systèmes cycliques hétérocycliques non aromatiques à 3 à 14 éléments monocycliques, bicycliques condensés et tricycliques condensés et les systèmes cycliques hétérocycliques aromatiques à 5 à 14 éléments monocycliques, bicycliques condensés et tricycliques condensés, chaque système cyclique hétérocyclique comportant 1 à 6 hétéroatomes choisis indépendamment parmi le groupe de l'azote, de l'oxygène et du soufre, à condition que chaque système cyclique hétérocyclique ne contienne pas plus de 4 azotes, pas plus de 2 oxygènes et pas plus de 2 soufres, chaque système cyclique hétérocyclique non aromatique ou aromatique étant substitué par $R^{19}$ et éventuellement substitué par un ou plusieurs $R^{20}$ ;

un système cyclique multicyclique choisi parmi les systèmes cycliques à 8 à 14 éléments bicycliques condensés et tricycliques condensés qui sont un système cyclique carbocyclique aromatique, un système cyclique carbocyclique non aromatique ou un système cyclique comportant un ou deux cycles non aromatiques, chacun renfermant un ou deux $J^1$ comme éléments de cycle et un ou deux éléments de cycle choisis indépendamment parmi C(=O) et $S(O)_2$, et n'importe lequel des cycles restants comme cycles carbocycliques aromatiques,

chaque système cyclique multicyclique étant substitué par $R^{19}$ et le cas échéant substitué par un ou plusieurs $R^{20}$ ; et

adamantyle substitué par $R^{19}$ et le cas échéant substitué par un ou plusieurs $R^{20}$ ;

chaque $J^1$ est choisi indépendamment dans le groupe formé par $-CHR^{23}-$, $-NR^{23}-$, -O- et $-S(O)_p-$ ;

$R^{18}$ est H, 1-2 halogène, alkyle en $C_1$-$C_6$, haloalkyle en $C_1$-$C_6$, alcoxy en $C_1$-$C_6$, haloalcoxy en $C_1$-$C_6$, alkényle en $C_2$-$C_6$, haloalkényle en $C_2$-$C_6$, alkynyle en $C_2$-$C_6$, alkylthio en $C_1$-$C_6$, haloalkylthio en $C_1$-$C_6$, alkylsulfinyle en $C_1$-$C_6$, alkylsulfonyle en $C_1$-$C_6$, cycloalkyle en $C_3$-$C_6$, alkényloxy en $C_3$-$C_6$, $CO_2$(alkyle en $C_1$-$C_6$), NH(alkyle en $C_1$-$C_6$), N(alkyle en $C_1$-$C_6$)$_2$, cyano, nitro, $SiR^{29}R^{30}R^{31}$ ou $GeR^{29}R^{30}R^{31}$;

$R^{19}$ est H ; 1-2 halogène ; alkyle en $C_1$-$C_6$ ; haloalkyle en $C_1$-$C_6$ ; alcoxy en $C_1$-$C_6$ ; haloalcoxy en $C_1$-$C_6$ ; alkényle en $C_2$-$C_6$ ; haloalkényle en $C_2$-$C_6$ ; alkynyle en $C_2$-$C_6$ ; alkylthio en $C_1$-$C_6$ ; haloalkylthio en $C_1$-$C_6$ ; alkylsulfinyle en $C_1$-$C_6$ ; alkylsulfonyle en $C_1$-$C_6$ ; cycloalkyle en $C_3$-$C_6$ ; alkényloxy en $C_3$-$C_6$ ; $CO_2$(alkyle en $C_1$-$C_6$) ; NH(alkyle en $C_1$-$C_6$) ; N(alkyle en $C_1$-$C_6$)$_2$ ; $-C(R^{28})=NOR^{27}$ ; cyano ; nitro ; $SF_5$ ; $SiR^{32}R^{33}R^{34}$ ; ou $GeR^{32}R^{33}R^{34}$ ; ou $R^{19}$ est phényle, benzyle, benzoyle, phénoxy, pyridinyle, pyridinyloxy, thiényle, thiényloxy, furanyle, pyrimidinyle ou pyrimidinyloxy, chacun éventuellement substitué par $R^{21}$ ou à la fois $R^{21}$ et $R^{22}$ ;

chaque $R^{20}$ est indépendamment halogène, alkyle en $C_1$-$C_4$, haloalkyle en $C_1$-$C_4$, alcoxy en $C_1$-$C_4$, nitro ou cyano ; ou si $R^{19}$ et $R^{20}$ sont fixés à des atomes adjacents sur Z, $R^{19}$ et ledit $R^{20}$ attaché immédiatement à côté peuvent être pris ensemble pour former $-OCH_2O-$ ou $-OCH_2CH_2O-$ ; chaque groupe $CH_2$ desdits $R^{19}$ et $R^{20}$ pris ensemble étant éventuellement substitué par 1-2 halogène ; ou bien

si Y et R20 sont fixés à des atomes adjacents sur Z et Y est $-CHR^{25}O-N=C(R^{17})-$, $-O-N=C(R^{17})-$, $-O-CH_2CH_2O-N=C(R^{17})-$, $-CHR^{25}O-C(R^{25})=C(R^{17})$, $-CH=N-N=C(R^{17})-$, $-CHR^{25}N(R^{25})-N=C(R^{17})-$ ou $-CHR^{25}N(COCH_3)-N=C(R^{17})-$, $R^{17}$ et ledit $R^{20}$ fixé l'un à côté de l'autre peuvent être pris ensemble pour former $-(CH_2)_r-J-$ tel que J soit fixé à Z ; J est $-CH_2-$, $-CH_2CH_2-$, $-OCH_2-$, $-CH_2O-$, $-SCH_2-$, $-CH_2S-$, $-N(R26)CH_2-$ou bien $-CH_2N(R^{26})-$ ; chaque groupe $CH_2$ dudit J étant éventuellement substitué par 1 à 2 $CH_3$;

$R^{21}$ et $R^{22}$ sont chacun indépendamment 1-2 halogène ; alkyle en $C_1$-$C_4$ ; haloalkyle en $C_1$-$C_4$ ; alkényle en $C_2$-$C_6$ ; haloalkényle en $C_2$-$C_6$ ; alkynyle en $C_2$-$C_6$ ; haloalkynyle en $C_2$-$C_6$ ; alcoxyalkyle en $C_2$-$C_6$ ; alkylthioalkyle en $C_2$-$C_6$ ; alcoxyalkynyle en $C_3$-$C_6$ ; tétrahydropyranyloxyalkynyle en $C_7$-$C_{10}$ ; benzyloxyméthyle ; alcoxy en $C_1$-$C_4$ ; haloalcoxy en $C_1$-$C_4$ ; alkényloxy en $C_3$-$C_6$ ; haloalkényloxy en $C_3$-$C_6$ ; alkynyloxy en $C_3$-$C_6$ ; haloalkynyloxy en $C_3$-$C_6$ ; alcoxyalcoxy en $C_2$-$C_6$ ; trialkylsilylalcoxyalcoxy en $C_5$-$C_9$ ; alkylthioalcoxy en $C_2$-$C_6$ ; alkylthio en $C_1$-$C_4$ ; haloalkylthio en $C_1$- $C_4$ ; alkylsulfinyle en $C_1$-$C_4$ ; haloalkylsulfinyle en $C_1$-$C_4$ ; alkylsulfonyle en $C_1$-$C_4$ ; haloalkylsulfonyle en $C_1$-$C_4$ ; alkénylthio en $C_3$-$C_6$ ; haloalkénylthio en $C_3$-$C_6$ ; alkylthioalkylthio en $C_2$-$C_6$ ; nitro ; cyano ; thiocyanato ; hydroxy ; $N(R^{36})_2$ ; SF5 ; $Si(R^{35})_3$ ; $Ge(R^{35})_3$ ; $(R^{35})_3Si-C{\equiv}C-$ ; $OSi(R^{35})_3$ ; $OGe(R^{35})_3$ ; $C(=O)R^{36}$ ; $C(=S)R^{36}$ ; $C(=O)OR^{36}$ ; $C(=S)OR^{36}$; $C(=O)SR^{36}$ ; $C(=S)SR^{36}$ ; $C(=O)N(R^{36})_2$; $C(=S)N(R^{36})_2$; $OC(=O)R^{36}$; $OC(=S)R^{36}$; $SC(=O)R^{36}$ ; $SC(=S)R^{36}$; $N(R^{36})C(=O)R^{36}$ ; $N(R^{36})C(=S)R^{36}$; $OC(=O)OR^{37}$ ; $OC(=O)SR^{37}$; $OC(=O)N(R^{36})_2$ ; $SC(=O)OR^{37}$ ; $SC(=O)SR^{37}$ ; $S(O)_2OR^{36}$ ; $S(O)_2N(R^{36})_2$ ; $OS(O)_2R^{37}$ ; $N(R^{36})S(O)_2R^{37}$ ; ou bien phényle, phénoxy, benzyle, benzyloxy, phénylsulfonyle, phényléthynyle ou pyridinyléthynyle, chacun éventuellement substitué par un halogène, alkyle en $C_1$-$C_4$, haloalkyle en $C_1$-$C_4$, alcoxy en $C_1$-$C_4$, haloalcoxy en $C_1$-$C_4$, nitro ou cyano ;

chaque $R^{23}$ est indépendamment H ; alkyle en $C_1$-$C_6$, haloalkyle en $C_1$-$C_6$ ; ou phényle éventuellement substitué par halogène, alkyle en $C_1$-$C_4$, haloalkyle en $C_1$-$C_4$, alcoxy en $C_1$-$C_4$, haloalcoxy en $C_1$-$C_4$, nitro ou cyano ;

$R^{24}$ est H, halogène, alkyle en $C_1$-$C_6$, haloalkyle en $C_1$-$C_6$, alkényle en $C_2$-$C_6$, haloalkényle en $C_2$-$C_6$, alkynyle en $C_2$-$C_6$, haloalkynyle en $C_2$-$C_6$ ou cycloalkyle en $C_3$-$C_6$ ; chaque $R^{25}$ est indépendamment H ; alkyle en $C_1$-$C_3$, cycloalkyle en $C_3$-$C_6$ ; ou phényle ou benzyle, chacun éventuellement substitué sur le cycle phényle par halogène, alkyle en $C_1$-$C_4$, haloalkyle en $C_1$-$C_4$, alcoxy en $C_1$-$C_4$, haloalcoxy en $C_1$-$C_4$, nitro ou cyano ; ou bien

si Y est $-CHR^{25}N(R^{25})C(=O)N(R^{25})-$, les deux $R^{25}$ fixés aux atomes d'azote desdits groupes peuvent être pris ensemble pour former $-(CH_2)_s-$ ; ou bien

si Y est $-CHR^{25}O-N=C(R^{17})NR^{25}-$, $R^{17}$ et $R^{25}$ contigu peuvent être pris ensemble pour former $-CH_2-(CH_2)_s-$, $-O-(CH_2)_s-$, $-S-(CH_2)_s-$ ou -N(alkyle en $C_1$-$C_3$)$-CH_2)_s-$ ; l'orientation de ladite liaison étant définie de façon telle que le résidu indiqué du côté gauche de la liaison est fixé au carbone et le résidu du côté droit de la liaison est fixé à l'azote ;

$R^{26}$, $R^{27}$ et $R^{28}$ sont chacun indépendamment H ; alkyle en $C_1$-$C_3$ ; cycloalkyle en $C_3$-$C_6$ ; ou phényle éventuellement substitué par halogène, alkyle en $C_1$-$C_4$, haloalkyle en $C_1$-$C_4$, alcoxy en $C_1$-$C_4$, haloalcoxy en $C_1$-$C_4$, nitro ou cyano ;

$R^{29}$, $R^{30}$, $R^{31}$, $R^{32}$, $R^{33}$ et $R^{34}$ sont chacun indépendamment alkyle en $C_1$-$C_6$, aikényle en $C_2$-$C_6$, alcoxy en $C_1$-$C_4$ ou phényle ; chaque $R^{35}$ est indépendamment alkyle en $C_1$-$C_4$, haloalkyle en $C_1$-$C_4$, alkényle en $C_2$-$C_4$, alcoxy en $C_1$-$C_4$ ou phényle ; chaque $R^{36}$ est indépendamment H ; alkyle en $C_1$-$C_6$ ; haloalkyle en $C_1$-$C_6$ ; alkényle en $C_2$-$C_6$ ; haloalkényle en $C_2$-$C_6$ ; alkynyle en $C_2$-$C_6$ ; haloalkynyle en $C_2$-$C_6$ ; cycloalkyle en $C_3$-$C_6$ ; ou phényle ou benzyle, chacun éventuellement substitué sur le cycle phényle par halogène, alkyle en $C_1$-$C_4$,

haloalkyle en $C_1$-$C_4$, alcoxy en $C_1$-$C_4$, haloalcoxy en $C_1$-$C_4$, nitro ou cyano ; chaque $R^{37}$ est indépendamment alkyle en $C_1$-$C_6$ ; haloalkyle en $C_1$-$C_6$ ; alkényle en $C_2$-$C_6$ ; haloalkényle en $C_2$-$C_6$ ; alkynyle en $C_2$-$C_6$ ; haloalkynyle en $C_2$-$C_6$ ; cycloalkyle en $C_3$-$C_6$ ; ou phényle ou benzyle, chacun éventuellement substitué sur le cycle phényle par halogène, alkyle en $C_1$-$C_4$, haloalkyle en $C_1$-$C_4$, alcoxy en $C_1$-$C_4$, haloalcoxy en $C_1$-$C_4$, nitro ou cyano ; m, n et p valent chacun indépendamment 0, 1 ou 2 ;
r vaut 0 ou 1 ; et
s vaut 2 ou 3.

**3.** Une composition fongicide selon l'une quelconque des revendications 1 ou 2, dans laquelle le composant (1) répond à la formule

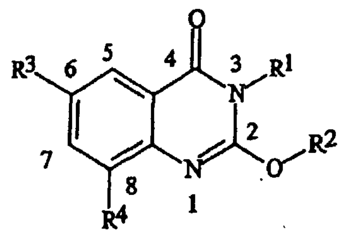

dans laquelle $R^1$ et $R^2$ sont tous les deux des propyle, $R^3$ est l'iode et $R^4$ est l'iode ou l'hydrogène ou bien $R^3$ est le brome et R4 est l'hydrogène.

**4.** Une composition fongicide selon l'une quelconque des revendications 1 à 3, dans laquelle le composant (2) est au moins un composé choisi dans le groupe consistant en 2,4-dihydro-5-méthoxy-2-méthyl-4-[2-[[[[1-[3-(trifluorométhyl)phényl]éthylidène]amino]oxy]méthyl]phényl]-3*H*-1,2,4-triazole-3-one ; krésoxim-méthyle ; azoxystrobine; et (*E*)-2-(méthoxyimino)-*N*-méthyl-2-(2-phénoxyphényl)acétamide.

**5.** Une composition fongicide selon l'une quelconque des revendications 1 à 4, comprenant en outre un composé qui contrôle les maladies fongiques par inhibition de la voie de la biosynthèse du stérol.

**6.** Une composition fongicide selon la revendication 5, dans laquelle le composé qui contrôle la maladie fongique par inhibition de la voie de la biosynthèse du stérol est un triazole.

**7.** Une composition fongicide selon l'une quelconque des revendications 1 à 6, dans laquelle le rapport molaire du composant (1) au composant (2) est d'environ 4:1 à 1:4.

**8.** Une composition fongicide selon l'une quelconque des revendications 1 à 7, dans laquelle le composant (1) est la 6-iodo-3-propyl-2-propyloxy-4(3*H*)-quinazolinone.

**9.** Une composition fongicide selon la revendication 1, comprenant une quantité fongicidement active de (1) 6-iodo-3-propyl-2-propyloxy-4(3*H*)-quinazolinone et (2) à la fois du 2,4-dihydro-5-méthoxy-2-méthyl-4-[2-[[[[1-[3-(trifluorométhyl)phényl]éthylidène]amino]oxy]méthyl]phényl]-3*H*-1,2,4-triazole-3-one et du flusilazole.

**10.** Une méthode pour contrôler les maladies des plantes provoquées par des pathogènes des plantes fongiques comprenant l'application à la plante ou à une région de celle-ci ou aux graines ou pousses de plantes d'une quantité efficacement fongicide d'une composition selon l'une quelconque des revendications 1 à 9.

**11.** La méthode selon la revendication 10, dans laquelle la maladie de la plante est le mildiou poudreux du blé *(Erysiphe graminis)*.

**12.** Une méthode de traitement de plants de blé ayant une maladie fongique provoquée par *Erysiphe graminis* comprenant l'application aux plants de blé ou à l'une de ses régions

(1) d'un composé de Formule I, y compris tous les isomères géométriques et stéréoisomères, *N*-oxydes et sels convenant en agriculture de celui-ci,

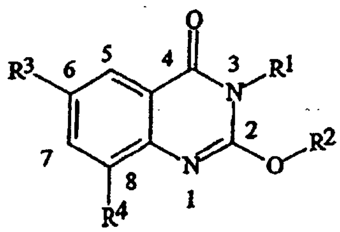

I

où $R^1$ et $R^2$ sont tous les deux des propyle, $R^3$ est l'iode et $R^4$ est l'iode ou l'hydrogène, ou bien $R^3$ est le brome et $R^4$ est l'hydrogène ; et
(2) au moins un composé choisi parmi les composants agissant sur le complexe *$bc_1$* du site de transfert d'électrons respiratoires mitochondrials fongiques ;

où le composant (1) et le composant (2) sont ajoutés en des quantités fongicidement efficaces synergétiques et le rapport du composant (1) au composant (2) est d'environ 30:1 à 1:30.

**13.** La méthode selon la revendication 11 ou 12, dans laquelle le rapport molaire du composant (1) au composant (2) est d'environ 4:1 à 1:10.

**14.** La méthode selon l'une quelconque des revendications 11 à 13, dans laquelle le composant (1) est utilisé à raison de 0,2 gramme/hectare ou davantage.